# EUROPEAN PATENT APPLICATION

(11) **EP 4 787 540 A1**
(43) Date of publication of application: **05.08.2026**
(21) Application number: 24863846.2
(22) Date of filing: 25.11.2024
(51) Int. Cl.: H01M 10/613

(54) **CONTROL METHOD AND APPARATUS FOR THERMAL MANAGEMENT SYSTEM**

(71) Applicant: Contemporary Amperex Technology Co., Limited, Ningde, Fujian 352100 (CN); Contemporary Amperex Future Energy Technology (Shenzhen) Limited, Shenzhen, Guangdong 518100 (CN)
(72) Inventor: YANG, Le, Ningde, Fujian 352100 (CN); LI, Qing, Ningde, Fujian 352100 (CN); XING, Yanqing, Ningde, Fujian 352100 (CN); WANG, Pengmin, Ningde, Fujian 352100 (CN); ZHANG, Kaiwen, Ningde, Fujian 352100 (CN); LI, Zhonghong, Ningde, Fujian 352100 (CN); YU, Dongxu, Ningde, Fujian 352100 (CN); WU, Kai, Ningde, Fujian 352100 (CN)
(74) Representative: Ran, Handong
(86) International application number: PCT/CN2024/134247
(87) International publication number: WO 2026/107817

(57) **Abstract**

Embodiments of this application provide a control method and control apparatus for a thermal management system. The thermal management system includes a liquid coolant system and a refrigerant system, the liquid coolant system including a heat dissipation apparatus and a cold storage apparatus, where the refrigerant system is configured to cool a battery and/or the cold storage apparatus, the heat dissipation apparatus is configured to cool the battery and/or the cold storage apparatus, and the cold storage apparatus is configured to cool the battery. The method includes: obtaining first thermal management parameter information, where the first thermal management parameter information includes parameter information of the battery, and the parameter information of the battery includes temperature information of the battery and/or parameter information reflecting a heating rate of the battery; and determining a thermal management strategy of the thermal management system based on the first thermal management parameter information. The control method and control apparatus for a thermal management system provided in this application can control the operation of the thermal management system in a more rational manner and can perform effective cooling and heat dissipation for a battery, improving performance and service life of the battery.

## Description

### TECHNICAL FIELD

This application relates to the field of battery technologies, and more specifically, to a control method and control apparatus for a thermal management system.

### BACKGROUND

With advantages such as high energy density, recyclable charging, safety, and environmental friendliness, batteries have been widely used in new energy vehicles, consumer electronics, integrated energy storage and charging systems, and other fields.

An integrated energy storage and charging system includes an energy storage system and a charging station and can use the energy storage system to charge an electric device using a charging pile. For example, during peak electricity consumption periods, the energy storage system can be used to charge the electric device, thereby alleviating the impact of the electric device on the power grid during charging with high current. When the electric device is charged with high current, the heat generation by a battery and other components in the energy storage system is large, and a rapid rise of temperature of the energy storage system may affect the stable operation of the integrated energy storage and charging system. Therefore, when the temperature of the battery and other components in the energy storage system is too high, a thermal management system is required to cool the battery and other components.

How to control the operation of the thermal management system in a rational manner to perform effective cooling and heat dissipation of the battery and other components in the integrated energy storage and charging system has become one of the urgent problems to be solved.

### SUMMARY

Embodiments of this application provide a control method and control apparatus for a thermal management system so that the operation of the thermal management system can be controlled in a more rational manner, and effective cooling and heat dissipation can be performed for a battery, thereby improving performance and service life of the battery.

According to a first aspect, a control method for a thermal management system is provided. The thermal management system includes a liquid coolant system and a refrigerant system, the liquid coolant system including a heat dissipation apparatus and a cold storage apparatus, where the refrigerant system is configured to cool a battery and/or the cold storage apparatus, the heat dissipation apparatus is configured to cool the battery and/or the cold storage apparatus, and the cold storage apparatus is configured to cool the battery. The method includes: obtaining first thermal management parameter information, where the first thermal management parameter information includes parameter information of the battery, and the parameter information of the battery includes temperature information of the battery and/or parameter information reflecting a heating rate of the battery; and determining a thermal management strategy of the thermal management system based on the first thermal management parameter information.

In this embodiment of this application, the operation of the thermal management system such as the refrigerant system, heat dissipation apparatus, and cold storage apparatus can be controlled in a rational manner based on parameter information related to the battery temperature, and the battery can be cooled in a rational manner, so that effective cooling and heat dissipation can be performed for the battery, improving performance and service life of the battery.

In a possible implementation, the first thermal management parameter further includes temperature information of the cold storage apparatus.

In this embodiment of this application, the operation of the thermal management system such as the refrigerant system, heat dissipation apparatus, and cold storage apparatus can be controlled in a rational manner based on parameter information related to the battery temperature and the temperature information of the cold storage apparatus, and the battery and/or the cold storage apparatus can be cooled in a rational manner, so that effective cooling and heat dissipation can be performed for the battery, improving performance and service life of the battery.

In a possible implementation, the parameter information of the battery includes temperature information of the battery, and the determining a thermal management strategy of the thermal management system based on the first thermal management parameter information includes cooling the battery under the condition that the temperature of the battery is greater than or equal to a first target temperature and a temperature of the cold storage apparatus is less than or equal to a preset cold storage temperature.

In this embodiment of this application, under the condition that the temperature of the battery is greater than or equal to the first target temperature and that the temperature of the cold storage apparatus is less than or equal to the preset cold storage temperature, that is, the temperature of the battery is high and the temperature of the cold storage apparatus is low, the battery can be cooled so that cooling and heat dissipation are effectively performed for the battery, improving performance and service life of the battery.

In a possible implementation, the parameter information of the battery includes temperature information of the battery, and before the determining a thermal management strategy of the thermal management system based on the first thermal management parameter information, the method further includes: determining that the temperature of the battery is less than or equal to the first target temperature; and obtaining second thermal management parameter information, the second thermal management parameter information including parameter information reflecting the heating rate of the battery; and the determining a thermal management strategy of the thermal management system based on the first thermal management parameter information includes determining a thermal management strategy of the thermal management system based on the first thermal management parameter information and the second thermal management parameter information.

In this embodiment of this application, under the condition that the temperature of the battery is less than or equal to the first target temperature, the thermal management strategy of the thermal management system for the battery and the cold storage apparatus can be determined based on the temperature of the battery, the parameter information reflecting the heating rate of the battery, and the temperature information of the cold storage apparatus. In other words, under the condition that the temperature of the battery is less than or equal to the first target temperature, for the cooling demand of the battery, in addition to considering the temperature of the battery, the parameter information reflecting the heating rate of the battery is also considered. With the cooling demand of the battery being comprehensively considered from different aspects, the thermal management system can be controlled in a more rational manner to cool the battery and/or the cold storage apparatus, and heat dissipation and cooling of the battery can be performed effectively and in a timely manner.

In a possible implementation, the determining a thermal management strategy of the thermal management system based on the first thermal management parameter information and the second thermal management parameter information includes cooling the battery under the condition that the temperature of the battery is less than or equal to the first target temperature, that a parameter value reflecting the heating rate of the battery is within a first range, and that the temperature of the cold storage apparatus is less than or equal to the preset cold storage temperature.

In a possible implementation, the determining a thermal management strategy of the thermal management system based on the first thermal management parameter information and the second thermal management parameter information includes: cooling the battery under the condition that the temperature of the battery is less than or equal to the first target temperature, that the parameter value reflecting the heating rate of the battery is within a second range, and that the temperature of the cold storage apparatus is less than or equal to the preset cold storage temperature; or cooling the battery under the condition that the temperature of the battery is less than or equal to the first target temperature and greater than or equal to a second target temperature, that the parameter value reflecting the heating rate of the battery is within a third range, and that the temperature of the cold storage apparatus is less than or equal to the preset cold storage temperature; or cooling the battery and the cold storage apparatus under the condition that the temperature of the battery is less than or equal to the first target temperature, that the parameter value reflecting the heating rate of the battery is within the second range, and that the temperature of the cold storage apparatus is greater than or equal to the preset cold storage temperature; or cooling the battery and the cold storage apparatus under the condition that the temperature of the battery is less than or equal to the first target temperature and greater than or equal to the second target temperature, that the parameter value reflecting the heating rate of the battery is within the third range, and that the temperature of the cold storage apparatus is greater than or equal to the preset cold storage temperature; or cooling the cold storage apparatus under the condition that the temperature of the battery is less than or equal to the second target temperature, that the parameter value reflecting the heating rate of the battery is within the third range, and that the temperature of the cold storage apparatus is greater than or equal to the preset cold storage temperature; where V1 ≥ V2 ≥ V3, and V1, V2, and V3 represent the heating rates of the battery when the parameter value reflecting the heating rate of the battery is within the first range, the second range, and the third range, respectively.

In a possible implementation, the parameter information of the battery includes parameter information reflecting the heating rate of the battery, and the determining a thermal management strategy of the thermal management system based on the first thermal management parameter information includes cooling the battery under the condition that a parameter value reflecting the heating rate of the battery is within a first range and that a temperature of the cold storage apparatus is less than or equal to a preset cold storage temperature.

In this embodiment of this application, under the condition that the parameter reflecting the heating rate of the battery is within the first range and that the temperature of the cold storage apparatus is less than or equal to the preset cold storage temperature, that is, under the condition that the heating rate of the battery is high and the temperature of the cold storage apparatus is low, the battery can be cooled, so that cooling and heat dissipation can be effectively performed for the battery, improving performance and service life of the battery.

In a possible implementation, before the determining a thermal management strategy of the thermal management system based on the first thermal management parameter information, the method further includes: determining that the parameter value reflecting the heating rate of the battery is not within the first range; and obtaining second thermal management parameter information, the second thermal management parameter information including the temperature information of the battery; and the determining a thermal management strategy of the thermal management system based on the first thermal management parameter information includes determining a thermal management strategy of the thermal management system based on the first thermal management parameter information and the second thermal management parameter information.

In this embodiment of this application, under the condition that the parameter value reflecting the heating rate of the battery is not within the first range, the thermal management strategy of the thermal management system for the battery and the cold storage apparatus can be determined based on the parameter information reflecting the heating rate of the battery, the temperature of the battery, and the temperature of the cold storage apparatus. In other words, under the condition that the heating rate of the battery is not particularly high, for the cooling demand of the battery, in addition to considering the parameter reflecting the heating rate of the battery, the temperature of the battery is also considered. With the cooling demand of the battery being comprehensively considered from different aspects, such as the heating rate of the battery and the temperature of the battery, the thermal management system can be controlled in a more rational manner to cool the battery and/or the cold storage apparatus, and heat dissipation and cooling of the battery can be performed effectively and in a timely manner.

In a possible implementation, the determining a thermal management strategy of the thermal management system based on the first thermal management parameter information and the second thermal management parameter information includes cooling the battery under the condition that the parameter value reflecting the heating rate of the battery is within a second range or a third range, that a temperature of the battery is greater than or equal to a first target temperature, and that the temperature of the cold storage apparatus is less than or equal to the preset cold storage temperature, where V1 ≥ V2 ≥ V3, and V1, V2, and V3 represent the heating rates of the battery when the parameter value reflecting the heating rate of the battery is within the first range, the second range, and the third range, respectively.

In a possible implementation, the determining a thermal management strategy of the thermal management system based on the first thermal management parameter information and the second thermal management parameter information includes: cooling the battery under the condition that the parameter value reflecting the heating rate of the battery is within the second range or the third range, that the temperature of the battery is less than or equal to the first target temperature and greater than or equal to the second target temperature, and that the temperature of the cold storage apparatus is less than or equal to the preset cold storage temperature; or cooling the battery under the condition that the parameter value reflecting the heating rate of the battery is within the second range, that the temperature of the battery is less than or equal to the second target temperature, and that the temperature of the cold storage apparatus is less than or equal to the preset cold storage temperature; or cooling the battery and the cold storage apparatus under the condition that the parameter value reflecting the heating rate of the battery is within the second range or the third range, that the temperature of the battery is less than or equal to the first target temperature and greater than or equal to the second target temperature, and that the temperature of the cold storage apparatus is greater than or equal to the preset cold storage temperature; or cooling the battery and the cold storage apparatus under the condition that the parameter value reflecting the heating rate of the battery is within the second range, that the temperature of the battery is less than or equal to the second target temperature, and that the temperature of the cold storage apparatus is greater than or equal to the preset cold storage temperature; or cooling the cold storage apparatus under the condition that the parameter value reflecting the heating rate of the battery is within the third range, that the temperature of the battery is less than or equal to the second target temperature, and that the temperature of the cold storage apparatus is greater than or equal to the preset cold storage temperature; where V1 ≥ V2 ≥ V3, and V1, V2, and V3 represent the heating rates of the battery when the parameter value reflecting the heating rate of the battery is within the first range, the second range, and the third range, respectively.

In a possible implementation, the determining a thermal management strategy of the thermal management system based on the first thermal management parameter information includes: cooling the battery under the condition that the temperature of the battery is greater than or equal to the second target temperature and less than or equal to the first target temperature and that the temperature of the cold storage apparatus is less than or equal to the preset cold storage temperature; or cooling the battery and the cold storage apparatus under the condition that the temperature of the battery is less than or equal to the first target temperature and greater than or equal to the second target temperature and that the temperature of the cold storage apparatus is greater than or equal to the preset cold storage temperature; or cooling the cold storage apparatus under the condition that the temperature of the battery is less than or equal to the second target temperature and that the temperature of the cold storage apparatus is greater than or equal to the preset cold storage temperature.

In this embodiment of this application, the thermal management strategy of the thermal management system for the battery and the cold storage apparatus can be determined based on the temperature information of the battery and the temperature information of the cold storage apparatus. Thus, the thermal management of the thermal management system for the battery and the cold storage apparatus can be controlled in a rational manner, so that effective cooling and heat dissipation can be performed for the battery, improving performance and service life of the battery.

In a possible implementation, the determining a thermal management strategy of the thermal management system based on the first thermal management parameter information includes: cooling the battery under the condition that the parameter value reflecting the heating rate of the battery is within the second range and that the temperature of the cold storage apparatus is less than or equal to the preset cold storage temperature; or cooling the battery and the cold storage apparatus under the condition that the parameter value reflecting the heating rate of the battery is within the second range and that the temperature of the cold storage apparatus is greater than or equal to the preset cold storage temperature; or cooling the cold storage apparatus under the condition that the parameter value reflecting the heating rate of the battery is within the third range and that the temperature of the cold storage apparatus is greater than or equal to the preset cold storage temperature, where V1 ≥ V2 ≥ V3, and V2 and V3 represent the heating rates of the battery when the parameter value reflecting the heating rate of the battery is within the second range and the third range, respectively.

In this embodiment of this application, the thermal management strategy of the thermal management system for the battery and the cold storage apparatus can be determined based on the parameter information reflecting the heating rate of the battery and the temperature information of the cold storage apparatus. Thus, the thermal management of the thermal management system for the battery and the cold storage apparatus can be controlled in a rational manner, so that effective cooling and heat dissipation can be performed for the battery, improving performance and service life of the battery.

In a possible implementation, the method further includes reducing charge and discharge parameters that cause battery temperature to rise under the condition that the temperature of the battery is greater than or equal to the first target temperature and that the temperature of the cold storage apparatus is greater than or equal to the preset cold storage temperature.

In this embodiment of this application, under the condition that the temperature of the battery is greater than or equal to the first target temperature and that the temperature of the cold storage apparatus is greater than or equal to the preset cold storage temperature, both the battery and the cold storage apparatus need to be cooled and the battery has a very high cooling demand. The thermal management system cannot meet the cooling demand of the battery under the condition that the cold storage apparatus cannot release cold energy. Thus, charge and discharge parameters that cause battery temperature to rise can be reduced, reducing the heating rate of the battery, so that the battery can charge and discharge within a normal temperature range or stop charging and discharging, which reduces the impact of excessively high battery temperature and improves performance and service life of the battery, thereby enhancing the performance and service life of the electric device.

In a possible implementation, the method further includes reducing charge and discharge parameters that cause battery temperature to rise under the condition that the temperature of the battery is less than or equal to the first target temperature, that the parameter value reflecting the heating rate of the battery is within the first range, and that the temperature of the cold storage apparatus is greater than or equal to the preset cold storage temperature.

In this embodiment of this application, under the condition that the temperature of the battery is less than or equal to the first target temperature, that the parameter value reflecting the heating rate of the battery is within the first range, and that the temperature of the cold storage apparatus is greater than or equal to the preset cold storage temperature, both the battery and the cold storage apparatus need to be cooled and the battery has a very high cooling demand. The thermal management system cannot meet the cooling demand of the battery under the condition that the cold storage apparatus cannot release cold energy. Thus, charge and discharge parameters that cause battery temperature to rise can be reduced, reducing the heating rate of the battery, so that the battery can charge and discharge within a normal temperature range or stop charging and discharging, which reduces the impact of excessively high battery temperature and improves performance and service life of the battery, thereby enhancing the performance and service life of the electric device.

In a possible implementation, the method further includes reducing charge and discharge parameters that cause battery temperature to rise under the condition that the parameter value reflecting the heating rate of the battery is within the first range and that the temperature of the cold storage apparatus is greater than or equal to the preset cold storage temperature.

In this embodiment of this application, under the condition that the parameter value reflecting the heating rate of the battery is within the first range and that the temperature of the cold storage apparatus is greater than or equal to the preset cold storage temperature, both the battery and the cold storage apparatus need to be cooled and the battery has a very high cooling demand. The thermal management system cannot meet the cooling demand of the battery under the condition that the cold storage apparatus cannot release cold energy. Thus, charge and discharge parameters that cause battery temperature to rise can be reduced, reducing the heating rate of the battery, so that the battery can charge and discharge within a normal temperature range or stop charging and discharging, which reduces the impact of excessively high battery temperature and improves performance and service life of the battery, thereby enhancing the performance and service life of the electric device.

In a possible implementation, the method further includes reducing charge and discharge parameters that cause battery temperature to rise under the condition that the parameter value reflecting the heating rate of the battery is not within the first range, that the temperature of the battery is greater than or equal to the first target temperature, and that the temperature of the cold storage apparatus is greater than or equal to the preset cold storage temperature.

In this embodiment of this application, under the condition that the parameter value reflecting the heating rate of the battery is not within the first range, that the temperature of the battery is greater than or equal to the first target temperature, and that the temperature of the cold storage apparatus is greater than or equal to the preset cold storage temperature, both the battery and the cold storage apparatus need to be cooled and the battery has a very high cooling demand. The thermal management system cannot meet the cooling demand of the battery under the condition that the cold storage apparatus cannot release cold energy. Thus, charge and discharge parameters that cause battery temperature to rise can be reduced, reducing the heating rate of the battery, so that the battery can charge and discharge within a normal temperature range or stop charging and discharging, which reduces the impact of excessively high battery temperature and improves performance and service life of the battery, thereby enhancing the performance and service life of the electric device.

In a possible implementation, the first thermal management parameter information further includes information about ambient temperature, and the cooling the battery includes: controlling the refrigerant system and the cold storage apparatus to cool the battery under the condition that the ambient temperature is greater than or equal to a first ambient temperature; or controlling the heat dissipation apparatus and the cold storage apparatus to cool the battery under the condition that the ambient temperature is less than or equal to the first ambient temperature.

In this embodiment of this application, when the battery needs to be cooled, the refrigerant system and the cold storage apparatus or the heat dissipation apparatus and the cold storage apparatus can be selected based on the ambient temperature to dissipate heat for the battery, so that effective cooling and heat dissipation can be performed for the battery, and the cooling capability requirements for the refrigerant system and the heat dissipation apparatus can be reduced to some extent.

In a possible implementation, the first thermal management parameter information further includes information about ambient temperature, and the cooling the battery includes: controlling the refrigerant system to cool the battery under the condition that the ambient temperature is greater than or equal to a first ambient temperature; or controlling the heat dissipation apparatus to cool the battery under the condition that the ambient temperature is less than or equal to the first ambient temperature.

In this embodiment of this application, under the condition that the cooling demand of the battery is not high, the refrigerant system or the heat dissipation apparatus can be selected based on the ambient temperature to cool the battery, which can save the energy consumption of the thermal management system to some extent while performing effective cooling and heat dissipation for the battery, improving performance and service life of the battery.

In a possible implementation, the cooling the battery includes controlling the cold storage apparatus to cool the battery.

In this embodiment of this application, under the condition that the cooling demand of the battery is not high, the cold storage apparatus can be used to cool the battery without the need of considering ambient temperature, which can simply the operation of the thermal management system in cooling the battery.

In a possible implementation, the first thermal management parameter information further includes information about ambient temperature, and the cooling the battery and the cold storage apparatus includes: controlling the refrigerant system to cool the battery and the cold storage apparatus under the condition that the ambient temperature is greater than or equal to a second ambient temperature; or controlling the heat dissipation apparatus to cool the battery and the cold storage apparatus under the condition that the ambient temperature is less than or equal to the second ambient temperature.

In this embodiment of this application, under the condition that the cooling demand of the battery is not high, the refrigerant system or the heat dissipation apparatus can be selected based on the ambient temperature to cool the battery and the cold storage apparatus, which can cool the cold storage apparatus while cooling the battery, allowing the cold storage apparatus to store cold energy in a timely manner and release the cold energy when the battery is in need of cooling.

In a possible implementation, the first thermal management parameter information further includes information about ambient temperature, and cooling the cold storage apparatus includes: controlling the refrigerant system to cool the cold storage apparatus under the condition that the ambient temperature is greater than or equal to a third ambient temperature; or controlling the heat dissipation apparatus to cool the cold storage apparatus under the condition that the ambient temperature is less than or equal to the third ambient temperature.

In this embodiment of this application, when the battery does not need to be cooled, the refrigerant system or the heat dissipation apparatus can be selected based on the ambient temperature to cool the cold storage apparatus, which can enable the cold storage apparatus to store cold energy in a timely manner and release the cold energy when the battery is in need of cooling.

In a possible implementation, the method further includes cooling a power transmission unit of the battery and/or a power module of the battery under the condition that the temperature of the battery is greater than or equal to the first target temperature.

In a possible implementation, the method further includes cooling a power transmission unit of the battery and/or a power module of the battery under the condition that the temperature of the battery is less than or equal to the first target temperature and that the parameter value reflecting the heating rate of the battery is within the first range.

In a possible implementation, the method further includes cooling a power transmission unit of the battery and/or a power module of the battery under the condition that the parameter value reflecting the heating rate of the battery is within the first range.

In a possible implementation, the method further includes cooling a power transmission unit of the battery and/or a power module of the battery under the condition that the parameter value reflecting the heating rate of the battery is within the second range or the third range and that the temperature of the battery is greater than or equal to the first target temperature.

In this embodiment of this application, under the condition that the temperature of the battery or the heating rate of the battery is relatively high, the power transmission unit and/or the power module of the battery or the like needs to be cooled, which can enable the power transmission unit and/or the power module of the battery to operate within an allowable temperature range, improving performance and service life of the power transmission unit and/or the power module.

In a possible implementation, the cooling a power transmission unit of the battery and/or a power module of the battery includes controlling the heat dissipation apparatus to cool the power transmission unit and/or the power module.

In this embodiment of this application, since the power transmission unit, power module, or the like of the battery can also operate normally at slightly higher temperature, the heat dissipation apparatus can usually be used to cool the power transmission unit and/or the heat dissipation module under non-extreme environments, saving energy consumption of the thermal management system.

According to a second aspect, a control apparatus for a thermal management system is provided. The thermal management system includes a liquid coolant system and a refrigerant system, the liquid coolant system including a heat dissipation apparatus and a cold storage apparatus, where the refrigerant system is configured to cool a battery and/or the cold storage apparatus, the heat dissipation apparatus is configured to cool the battery and/or the cold storage apparatus, and the cold storage apparatus is configured to cool the battery. The apparatus includes: an obtaining unit, configured to obtain first thermal management parameter information, where the first thermal management parameter information includes parameter information of the battery, and the parameter information of the battery includes temperature information of the battery and/or parameter information reflecting a heating rate of the battery; and a processing unit, configured to determine a thermal management strategy for the thermal management system based on the first thermal management parameter information.

In a possible implementation, the first thermal management parameter includes temperature information of the cold storage apparatus.

In a possible implementation, the processing unit is configured to cool the battery under the condition that a temperature of the battery is greater than or equal to a first target temperature and that a temperature of the cold storage apparatus is less than or equal to a preset cold storage temperature.

In a possible implementation, the parameter information of the battery includes temperature information of the battery, the processing unit is configured to determine that the temperature of the battery is less than or equal to the first target temperature; the obtaining unit is configured to obtain second thermal management parameter information, the second thermal management parameter information including parameter information reflecting the heating rate of the battery; and the processing unit is configured to determine a thermal management strategy of the thermal management system based on the first thermal management parameter information and the second thermal management parameter information.

In a possible implementation, the processing unit is configured to cool the battery under the condition that the temperature of the battery is less than or equal to the first target temperature, that a parameter value reflecting the heating rate of the battery is within a first range, and that the temperature of the cold storage apparatus is less than or equal to the preset cold storage temperature.

In a possible implementation, the processing unit is configured to: cool the battery under the condition that the temperature of the battery is less than or equal to the first target temperature, that the parameter value reflecting the heating rate of the battery is within a second range, and that the temperature of the cold storage apparatus is less than or equal to the preset cold storage temperature; or cool the battery under the condition that the temperature of the battery is less than or equal to the first target temperature and greater than or equal to a second target temperature, that the parameter value reflecting the heating rate of the battery is within a third range, and that the temperature of the cold storage apparatus is less than or equal to the preset cold storage temperature; or cool the battery and the cold storage apparatus under the condition that the temperature of the battery is less than or equal to the first target temperature, that the parameter value reflecting the heating rate of the battery is within the second range, and that the temperature of the cold storage apparatus is greater than or equal to the preset cold storage temperature; or cool the battery and the cold storage apparatus under the condition that the temperature of the battery is less than or equal to the first target temperature and greater than or equal to the second target temperature, that the parameter value reflecting the heating rate of the battery is within the third range, and that the temperature of the cold storage apparatus is greater than or equal to the preset cold storage temperature; or cool the cold storage apparatus under the condition that the temperature of the battery is less than or equal to the second target temperature, that the parameter value reflecting the heating rate of the battery is within the third range, and that the temperature of the cold storage apparatus is greater than or equal to the preset cold storage temperature; where V1 ≥ V2 ≥ V3, and V1, V2, and V3 represent the heating rates of the battery when the parameter value reflecting the heating rate of the battery is within the first range, the second range, and the third range, respectively.

In a possible implementation, the parameter information of the battery includes parameter information reflecting the heating rate of the battery, and the processing unit is configured to cool the battery under the condition that the parameter value reflecting the heating rate of the battery is within the first range and that the temperature of the cold storage apparatus is less than or equal to the preset cold storage temperature.

In a possible implementation, the processing unit is configured to determine that the parameter value reflecting the heating rate of the battery is not within the first range; the obtaining unit is configured to obtain second thermal management parameter information, the second thermal management parameter information including temperature information of the battery; and the processing unit is configured to determine a thermal management strategy of the thermal management system based on the first thermal management parameter information and the second thermal management parameter information.

In a possible implementation, the processing unit is configured to cool the battery under the condition that the parameter value reflecting the heating rate of the battery is within the second range or the third range, that the temperature of the battery is greater than or equal to the first target temperature, and that the temperature of the cold storage apparatus is less than or equal to the preset cold storage temperature, where V1 ≥ V2 ≥ V3, and V2 and V3 represent the heating rates of the battery when the parameter value reflecting the heating rate of the battery is within the second range and the third range, respectively.

In a possible implementation, the processing unit is configured to: cool the battery under the condition that the parameter value reflecting the heating rate of the battery is within the second range or the third range, that the temperature of the battery is less than or equal to the first target temperature and greater than or equal to the second target temperature, and that the temperature of the cold storage apparatus is less than or equal to the preset cold storage temperature; or cool the battery under the condition that the parameter value reflecting the heating rate of the battery is within the second range, that the temperature of the battery is less than or equal to the second target temperature, and that the temperature of the cold storage apparatus is less than or equal to the preset cold storage temperature; or cool the battery and the cold storage apparatus under the condition that the parameter value reflecting the heating rate of the battery is within the second range or the third range, that the temperature of the battery is less than or equal to the first target temperature and greater than or equal to the second target temperature, and that the temperature of the cold storage apparatus is greater than or equal to the preset cold storage temperature; or cool the battery and the cold storage apparatus under the condition that the parameter value reflecting the heating rate of the battery is within the second range, that the temperature of the battery is less than or equal to the second target temperature, and that the temperature of the cold storage apparatus is greater than or equal to the preset cold storage temperature; or cool the cold storage apparatus under the condition that the parameter value reflecting the heating rate of the battery is within the third range, that the temperature of the battery is less than or equal to the second target temperature, and that the temperature of the cold storage apparatus is greater than or equal to the preset cold storage temperature; where V1 ≥ V2 ≥ V3, and V2 and V3 represent the heating rates of the battery when the parameter value reflecting the heating rate of the battery is within the second range and the third range, respectively.

In a possible implementation, the processing unit is configured to: cool the battery under the condition that the temperature of the battery is greater than or equal to the second target temperature and less than or equal to the first target temperature and that the temperature of the cold storage apparatus is less than or equal to the preset cold storage temperature; or cool the battery and the cold storage apparatus under the condition that the temperature of the battery is less than or equal to the first target temperature and greater than or equal to a second target temperature and that the temperature of the cold storage apparatus is greater than or equal to the preset cold storage temperature; or cool the cold storage apparatus under the condition that the temperature of the battery is less than or equal to the second target temperature and that the temperature of the cold storage apparatus is greater than or equal to the preset cold storage temperature.

In a possible implementation, the processing unit is configured to: cool the battery under the condition that the parameter value reflecting the heating rate of the battery is within the second range and that the temperature of the cold storage apparatus is less than or equal to the preset cold storage temperature; or cool the battery and the cold storage apparatus under the condition that the parameter value reflecting the heating rate of the battery is within the second range and that the temperature of the cold storage apparatus is greater than or equal to the preset cold storage temperature; or cool the cold storage apparatus under the condition that the parameter value reflecting the heating rate of the battery is within the third range and that the temperature of the cold storage apparatus is greater than or equal to the preset cold storage temperature, where V1 ≥ V2 ≥ V3, and V2 and V3 represent the heating rates of the battery when the parameter value reflecting the heating rate of the battery is within the second range and the third range, respectively.

In a possible implementation, the processing unit is configured to reduce charge and discharge parameters that cause battery temperature to rise under the condition that the temperature of the battery is greater than or equal to the first target temperature and that the temperature of the cold storage apparatus is greater than or equal to the preset cold storage temperature.

In a possible implementation, the processing unit is configured to reduce charge and discharge parameters that cause battery temperature to rise under the condition that the temperature of the battery is less than or equal to the first target temperature, that the parameter value reflecting the heating rate of the battery is within the first range, and that the temperature of the cold storage apparatus is greater than or equal to the preset cold storage temperature.

In a possible implementation, the processing unit is configured to reduce charge and discharge parameters that cause battery temperature to rise under the condition that the parameter value reflecting the heating rate of the battery is within the first range and that the temperature of the cold storage apparatus is greater than or equal to the preset cold storage temperature.

In a possible implementation, the processing unit is configured to reduce charge and discharge parameters that cause battery temperature to rise under the condition that the parameter value reflecting the heating rate of the battery is not within the first range, that the temperature of the battery is greater than or equal to the first target temperature, and that the temperature of the cold storage apparatus is greater than or equal to the preset cold storage temperature.

In a possible implementation, the first thermal management parameter information further includes information about ambient temperature, and the processing unit is configured to: control the refrigerant system and the cold storage apparatus to cool the battery under the condition that the ambient temperature is greater than or equal to a first ambient temperature; or control the heat dissipation apparatus and the cold storage apparatus to cool the battery under the condition that the ambient temperature is less than or equal to the first ambient temperature.

In a possible implementation, the first thermal management parameter information further includes information about ambient temperature, and the processing unit is configured to: control the refrigerant system to cool the battery under the condition that the ambient temperature is greater than or equal to a first ambient temperature; or control the heat dissipation apparatus to cool the battery under the condition that the ambient temperature is less than or equal to the first ambient temperature.

In a possible implementation, the processing unit is configured to control the cold storage apparatus to cool the battery.

In a possible implementation, the processing unit is configured to: control the refrigerant system to cool the battery and the cold storage apparatus under the condition that the ambient temperature is greater than or equal to a second ambient temperature; or control the heat dissipation apparatus to cool the battery and the cold storage apparatus under the condition that the ambient temperature is less than or equal to the second ambient temperature.

In a possible implementation, the processing unit is configured to: control the refrigerant system to cool the cold storage apparatus under the condition that the ambient temperature is greater than or equal to a third ambient temperature; or control the heat dissipation apparatus to cool the cold storage apparatus under the condition that the ambient temperature is less than or equal to the third ambient temperature.

In a possible implementation, the processing unit is configured to cool a power transmission unit of the battery and/or a power module of the battery under the condition that the temperature of the battery is greater than or equal to the first target temperature.

In a possible implementation, the processing unit is configured to cool a power transmission unit of the battery and/or a power module of the battery under the condition that the temperature of the battery is less than or equal to the first target temperature and that the parameter value reflecting the heating rate of the battery is within the first range.

In a possible implementation, the processing unit is configured to cool a power transmission unit of the battery and/or a power module of the battery under the condition that the parameter value reflecting the heating rate of the battery is within the first range.

In a possible implementation, the processing unit is configured to cool a power transmission unit of the battery and/or a power module of the battery under the condition that the parameter value reflecting the heating rate of the battery is within the second range or the third range and that the temperature of the battery is greater than or equal to the first target temperature.

In a possible implementation, the processing unit is configured to control the heat dissipation apparatus to cool the power transmission unit and/or the power module.

According to a third aspect, a control apparatus for a thermal management system is provided. The control apparatus includes a memory and a processor, where the memory is configured to store instructions, and the processor is configured to read an instruction and perform, according to the instruction, the control method according to the first aspect and any one of the possible implementations of the first aspect.

According to a fourth aspect, an integrated energy storage and charging system is provided. The integrated energy storage and charging system includes an energy storage system, a charging station, a thermal management system, and the control apparatus according to the second aspect and any one of the possible implementations of the second aspect.

According to a fifth aspect, a chip is provided, including a processor configured to call and run a computer program from a memory, so that a device on which the chip is installed performs the control method according to the first aspect and any one of the possible implementations of the first aspect.

According to a sixth aspect, a computer program product is provided. When the computer program is executed by a computer, the computer is enabled to implement the control method according to the first aspect and any one of the possible implementations of the first aspect.

According to a seventh aspect, a computer-readable storage medium is provided. The computer-readable storage medium is configured to store a computer program, and when the computer program is executed by a computer, the computer is enabled to implement the control method according to the first aspect and any one of the possible implementations of the first aspect.

According to an eighth aspect, a computer program product is provided, including a computer program instruction. When the computer program instruction is executed by a computer, the computer is enabled to execute the control method according to the first aspect and any one of the possible implementations of the first aspect.

### BRIEF DESCRIPTION OF DRAWINGS

FIG. 1 is a schematic structural diagram of a thermal management system according to an embodiment of this application.
FIG. 2 is a schematic structural diagram of a thermal management system according to an embodiment of this application.
FIG. 3 is a schematic flowchart of a control method for a thermal management system according to an embodiment of this application.
FIG. 4 is a schematic flowchart of a control method for a thermal management system according to an embodiment of this application.
FIG. 5 is a schematic flowchart of a control method for a thermal management system according to an embodiment of this application.
FIG. 6 is a schematic flowchart of a control method for a thermal management system according to an embodiment of this application.
FIG. 7 is a schematic flowchart of a control method for a thermal management system according to an embodiment of this application.
FIG. 8 is a schematic flowchart of a control method for a thermal management system according to an embodiment of this application.
FIG. 9 is a schematic flowchart of a control method for a thermal management system according to an embodiment of this application.
FIG. 10 is a schematic cycle diagram of a thermal management system when a refrigerant system and a cold storage apparatus cool a battery according to an embodiment of this application.
FIG. 11 is a schematic cycle diagram of a thermal management system when a heat dissipation apparatus and a cold storage apparatus cool a battery according to an embodiment of this application.
FIG. 12 is a schematic cycle diagram of a thermal management system when a refrigerant system cools a battery according to an embodiment of this application.
FIG. 13 is a schematic cycle diagram of a thermal management system when a heat dissipation apparatus cools a battery according to an embodiment of this application.
FIG. 14 is a schematic cycle diagram of a thermal management system when a cold storage apparatus cools a battery according to an embodiment of this application.
FIG. 15 is a schematic cycle diagram of a thermal management system when a refrigerant system cools a battery and a cold storage apparatus according to an embodiment of this application.
FIG. 16 is a schematic cycle diagram of a thermal management system when a heat dissipation apparatus cools a battery and a cold storage apparatus according to an embodiment of this application.
FIG. 17 is a schematic cycle diagram of a thermal management system when a refrigerant system cools a cold storage apparatus according to an embodiment of this application.
FIG. 18 is a schematic cycle diagram of a thermal management system when a heat dissipation apparatus cools a cold storage apparatus according to an embodiment of this application.
FIG. 19 is a schematic flowchart of a control method for a thermal management system according to an embodiment of this application.
FIG. 20 is a schematic flowchart of a control method for a thermal management system according to an embodiment of this application.
FIG. 21 is a schematic flowchart of a control method for a thermal management system according to an embodiment of this application.
FIG. 22 is a schematic flowchart of a control method for a thermal management system according to an embodiment of this application.
FIG. 23 is a schematic block diagram of a control apparatus for a thermal management system according to an embodiment of this application.
FIG. 24 is a further schematic block diagram of a control apparatus for a thermal management system according to an embodiment of this application.

### DETAILED DESCRIPTION

The following further describes implementations of this application in detail with reference to accompanying drawings and embodiments. The following detailed description of embodiments and the accompanying drawings are intended to illustrate the principle of this application rather than to limit the scope of this application, that is, this application is not limited to the embodiments as described.

In the description of the embodiments of this application, the technical terms "first", "second", and the like are merely intended to distinguish between different objects, and shall not be understood as any indication or implication of relative importance or any implicit indication of the number, specific sequence, or primary-secondary relationship of the technical features indicated. In the description of the embodiments of this application, "a plurality of" means at least two unless otherwise specifically stated.

The term "and/or" is only an associative relationship for describing associated objects, indicating that three relationships may be present. For example, A and/or B may indicate three cases: presence of only A; presence of both A and B; and presence of only B. In addition, the character "/" in this specification generally indicates an "or" relationship between contextually associated objects.

In this specification, reference to "embodiment" means that specific features, structures or characteristics described with reference to the embodiment may be incorporated in at least one embodiment of this application. The word "embodiment" appearing in various places in this specification does not necessarily refer to the same embodiment or an independent or alternative embodiment that is exclusive of other embodiments. Persons skilled in the art explicitly and implicitly understand that the embodiments described herein may be combined with other embodiments.

With advantages such as high energy density, recyclable charging, safety, and environmental friendliness, batteries have been widely used in new energy vehicles, consumer electronics, integrated energy storage and charging systems, and other fields.

An integrated energy storage and charging system includes an energy storage system and a charging station and can use the energy storage system to charge an electric device using a charging pile. For example, during peak electricity consumption periods, the energy storage system can be used to charge the electric device, thereby alleviating the impact of the electric device on the power grid during charging with high current. When the electric device is charged with high current, the heat generation by a battery and other components in the energy storage system is large, and a rapid rise of temperature of the energy storage system may affect the stable operation of the integrated energy storage and charging system. Therefore, when the temperature of the battery and other components in the energy storage system is too high, a thermal management system is required to cool the battery and other components.

How to control the operation of the thermal management system in a rational manner to perform effective cooling and heat dissipation of the battery and other components in the integrated energy storage and charging system has become one of the urgent problems to be solved.

In response to the foregoing problem, this application provides a control method and control apparatus for a thermal management system. The thermal management system includes a liquid coolant system and a refrigerant system, the liquid coolant system including a heat dissipation apparatus and a cold storage apparatus, where the refrigerant system is configured to cool a battery and/or the cold storage apparatus, the heat dissipation apparatus is configured to cool the battery and/or the cold storage apparatus, and the cold storage apparatus is configured to cool the battery. The method includes: obtaining first thermal management parameter information, where the first thermal management parameter information includes parameter information of the battery, and the parameter information of the battery includes temperature information of the battery and/or parameter information reflecting a heating rate of the battery; and determining a thermal management strategy of the thermal management system based on the first thermal management parameter information.

The control method and control apparatus for a thermal management system provided in the embodiments of this application can control the operation of the thermal management system such as the refrigerant system, heat dissipation apparatus, and cold storage apparatus in a more rational manner and can perform effective cooling and heat dissipation for a battery, thereby improving performance and service life of the battery.

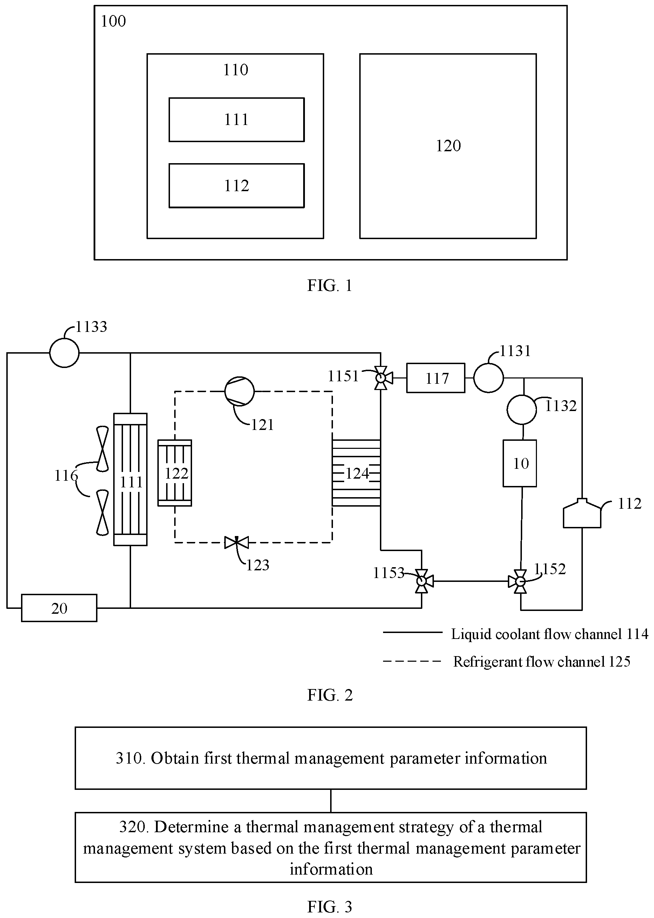

FIG. 1 is a schematic structural diagram of a thermal management system to which embodiments of this application are applicable.

The thermal management system 100 includes a liquid coolant system 110 and a refrigerant system 120.

The liquid coolant system 110 includes a heat dissipation apparatus 111 and a cold storage apparatus 112.

In some embodiments, the refrigerant system 120 is configured to cool the battery and/or the cold storage apparatus 112, the heat dissipation apparatus 111 is configured to cool the battery and/or the cold storage apparatus 112, and the cold storage apparatus 112 is configured to cool the battery.

The liquid coolant system 110 uses a liquid coolant such as water as a medium. The liquid coolant flows through the battery and/or the cold storage apparatus 112, carrying away heat from the battery and/or the cold storage apparatus 112 to cool the battery and/or the cold storage apparatus 112. The heat absorbed by the liquid coolant from the battery and/or the cold storage apparatus 112 is quickly transferred to an external environment, such as air medium, through the heat dissipation apparatus 111, such as a radiating water tank.

The cold storage apparatus 112 is a device capable of storing and releasing cold energy. Low-temperature cold energy can be stored in the cold storage apparatus 112 through the flow of the liquid coolant and released when needed, such as when the battery or the like needs to be cooled down.

The refrigerant system 120 uses a refrigerant such as ammonia, water, or brine, as a medium, and achieves heat transfer through evaporation and condensation of the refrigerant, thereby cooling a thermal management object such as the battery.

In some embodiments, the refrigerant system 120 can directly or indirectly cool the battery and/or the cold storage apparatus 112. For example, the refrigerant of the refrigerant system 120 flows through the battery and/or the cold storage apparatus 112, carrying away heat from the battery and/or the cold storage apparatus 112, thereby cooling the battery and/or the cold storage apparatus 112. As another example, the refrigerant of the refrigerant system 120 can exchange heat with the liquid coolant flowing through the battery and/or the cold storage apparatus 112, thereby cooling the battery and/or the cold storage apparatus 112.

In some embodiments, the thermal management system 100 can also cool a power transmission unit of the battery and/or a power module of the battery.

For example, the power transmission unit may include a charging cable and/or a charging connector of the battery.

For example, the power module may include a direct current/direct current (direct current/direct current, DC/DC) converter, an alternating current/direct current (alternating current/direct current, AC/DC) converter, an energy storage inverter, or the like.

In some embodiments, the liquid coolant system 110 may further include a positive temperature coefficient (positive temperature coefficient, PTC) heater. The PCT heater is configured to heat the battery.

It should be understood that the various components shown in FIG. 1 are merely examples, and in actual applications, these components can have different names or can be added or removed as needed.

A further exemplary introduction will be made below to the thermal management system 100 applicable to the embodiment of this application with reference to FIG. 2.

In some embodiments, the liquid coolant system 110 may further include a pump 113, a liquid coolant flow channel 114, and a multi-way valve 115.

The pump 113 is configured to transmit mechanical energy or other external energy to the liquid coolant, increasing the energy of the liquid coolant, thereby accelerating the flow speed and pressure of the liquid coolant.

The valve core of the multi-way valve 115 is rotated so that different ports of the multi-way valve 115 are connected and different flow channels are connected to each other, thereby switching a different flow path for the liquid coolant.

The number of pumps 113 may be one or more, and the number of multi-way valves 115 may be one or more.

In some embodiments, the heat dissipation apparatus 111, a first three-way valve 1151, a first pump 1131, a second pump 1132, the battery 10, a second three-way valve 1152, and a third three-way valve 1153 are sequentially connected, where the pump 113 may include the first pump 1131 and the second pump 1132.

In some embodiments, one end of the cold storage apparatus 112 may be connected to a liquid coolant flow channel 114 between the first pump 1131 and the second pump 1132, and the other end may be connected to a port of the second three-way valve 1152.

Alternatively, the second three-way valve 1152 may be replaced with a four-way valve, and the first pump 1131 is removed. One end of the cold storage apparatus 112 may be connected to a liquid coolant flow channel 114 between the second pump 1132 and the battery 10, and the other end may be connected to a port of the four-way valve. Also, a section of the liquid coolant flow channel 114 may be provided between the four-way valve and an end of the battery 10 away from the four-way valve.

In some embodiments, the liquid coolant system 110 can include an air blower 116. The air blower 116 may be arranged near the heat dissipation apparatus 111. The air blower 116 may be configured to dissipate heat from the heat dissipation apparatus 111, improving the speed and efficiency of heat exchange between the heat dissipation apparatus 111 and the environment.

In some embodiments, the liquid coolant system 110 may further include a PTC heater 117. For example, the PTC heater 117 may be arranged on a liquid coolant flow channel 114 between the first three-way valve 1151 and the first pump 1131.

In some embodiments, the refrigerant system 120 may include a compressor 121, a condenser 122, an expansion valve 123, an evaporator 124, a refrigerant flow channel 125, and the like.

The compressor 121 is a driven fluid machine that raises low-pressure gas to high-pressure gas. A suction port of the compressor 121 inhales low-pressure gaseous refrigerant, compresses the low-pressure gaseous refrigerant with a piston driven by a motor, and discharges high-pressure gaseous refrigerant through its exhaust port, providing power for the phase change cycle of the refrigerant.

The condenser 122 is a device capable of converting gas or vapor into liquid (gas-liquid conversion). The high-pressure gaseous refrigerant is converted into high-pressure liquid refrigerant through the condenser 122, and heat released during the gas-liquid conversion process is quickly transferred into an external environment, such as air medium.

The expansion valve 123 is configured to depressurize the high-pressure liquid refrigerant, cool the depressurized refrigerant, and convert it into low-pressure liquid refrigerant. The input high-pressure liquid refrigerant can be depressurized (or in other words, pressure-released or throttled) by the expansion valve 123 to obtain low-pressure liquid refrigerant. The expansion valve 123 may also be referred to as an electronic expansion valve, thermal expansion valve, or throttle valve.

In some embodiments, the expansion valve 123 is installed at the inlet of the evaporator 124. The expansion valve 123 can play a role in throttling and controlling the flow of the refrigerant.

The evaporator 124 is a device capable of converting a liquid substance into a gaseous state. A low-pressure liquid refrigerant passing through the evaporator 124 absorbs heat such as heat in the liquid coolant flowing through the battery 10 and is converted into a low-pressure gaseous refrigerant.

In some embodiments, a port of the first three-way valve 1151 (the port other than a port connecting the heat dissipation apparatus 111 and a port connecting the first pump 1131) and a port of the third three-way valve 1153 (the port other than a port connecting the heat dissipation apparatus 111 and a port connecting the second three-way valve 1152) are connected through a section of the liquid coolant flow channel 114, and the liquid coolant in this section of the liquid coolant flow channel can exchange heat with the refrigerant of the refrigerant system. For example, when the refrigerant system 120 is used to cool the battery, the liquid coolant in the liquid coolant flow channel 114 (such as a high-temperature liquid coolant flowing through the battery 10) may flow through the evaporator 124 to exchange heat with the refrigerant (low-pressure liquid refrigerant) in the refrigerant flow channel 125.

Through a thermal management system shown in FIG. 2, one or more of a refrigerant system 120, a heat dissipation apparatus 111, or a cold storage apparatus 112 can cool a battery 10. The refrigerant system 120 and/or the heat dissipation apparatus 111 can cool the cold storage apparatus 112.

For example, when a temperature of the battery 10 is too high, the refrigerant system 120 is used to cool the battery 10. A compressor 121 can compress a low-pressure gaseous refrigerant into a high-pressure gaseous refrigerant and discharge the high-pressure gaseous refrigerant, which flows into a condenser 122 through a refrigerant flow channel. The condenser 122 converts the high-pressure gaseous refrigerant into a high-pressure liquid refrigerant, which is then depressurized by an expansion valve 123 and converted into a low-pressure liquid refrigerant. The low-pressure liquid refrigerant flows into an evaporator 124 through the refrigerant flow channel. In addition, under the action of the first pump 1131, the high-temperature liquid coolant flowing through the battery 10 passes through the first three-way valve 1151 and flows into the evaporator 124, where the high-temperature liquid coolant exchanges heat with the low-pressure liquid refrigerant, the high-temperature liquid coolant releases heat and is converted into a low-temperature liquid coolant, and the low-pressure liquid refrigerant absorbs heat and is converted into a low-pressure gaseous refrigerant. The low-pressure gaseous refrigerant may continue to flow into the compressor 121 through the refrigerant flow channel for compression, thereby completing a refrigerant cycle process; and the low-temperature liquid coolant flows into the battery 10 through the third three-way valve 1153 and the second three-way valve 1152 to cool the battery 10, thereby completing a liquid coolant cycle process.

In some embodiments, the liquid coolant system 110 may further include a third pump 1133. For example, the heat dissipation apparatus 111 may be sequentially connected with the third pump 1133, a charging gun, and/or a DC/DC converter 20. As shown in FIG. 2, two ends of a liquid coolant branch where the third pump 1133, the charging gun, and/or the DC/DC converter 20 are located are respectively connected to the liquid coolant flow channel 114 at two ends of the heat dissipation apparatus 111. Thus, one or more of the refrigerant system 120, the heat dissipation apparatus 111, or the cold storage apparatus 112 can cool the charging gun and/or the DC/DC converter 20.

For example, under the action of the third pump 1133, the high-temperature liquid coolant flowing through the charging gun and/or the DC/DC converter 20 flows into the heat dissipation apparatus 111. Heat in the high-temperature liquid coolant is quickly transferred into the environment, such as air medium, through the heat dissipation apparatus 111, so that the high-temperature liquid coolant is converted to a low-temperature liquid coolant, which continues to flow to the charging gun and/or the DC/DC converter 20 under the action of the third pump 1133, achieving cyclic cooling of the charging gun and/or the DC/DC converter 20.

In this application, the battery in FIG. 2 can be replaced with other devices with higher heat generation and/or higher cooling demand. The charging gun and/or DC/DC converter in FIG. 2 can also be replaced with other devices, for example, other devices such as a cable or an energy storage inverter that need to work with a device with higher heat generation and/or higher cooling demand. The other devices have relatively lower heat generation and/or cooling demand.

It should be understood that the various components shown in FIG. 2 are merely examples, and in actual applications, these components can have different names or can be added or removed as needed.

FIG. 3 is a schematic flowchart of a control method for a thermal management system according to an embodiment of this application. The control method for a thermal management system shown in FIG. 3 can be applicable to the thermal management system shown in FIG. 1 and FIG. 2.

The thermal management system includes a liquid coolant system and a refrigerant system, the liquid coolant system including a heat dissipation apparatus and a cold storage apparatus, where the refrigerant system is configured to cool a battery and/or the cold storage apparatus, the heat dissipation apparatus is configured to cool the battery and/or the cold storage apparatus, and the cold storage apparatus is configured to cool the battery. The control method for the thermal management system includes the following content.

310. Obtain first thermal management parameter information.

The first thermal management parameter information includes parameter information of the battery, and the parameter information of the battery includes temperature information of the battery and/or parameter information reflecting a heating rate of the battery.

The heating rate of the battery can be determined by a parameter reflecting the heating rate of the battery.

For example, the parameter information reflecting the heating rate of the battery includes information on the temperature rise rate of the battery, information on charge and discharge rates of the battery, information on charge and discharge currents of the battery, information on charge and discharge voltages of the battery, information on charge and discharge powers of the battery, or the like. Generally, a higher temperature rise rate of the battery, higher charge and discharge rates of the battery, higher charge and discharge currents of the battery, higher charge and discharge voltages of the battery, or higher charge and discharge powers of the battery indicate a greater heat generation of the battery and a faster heating rate of the battery.

The heat dissipation apparatus can quickly transfer heat into an external environment, such as air medium. For example, the heat dissipation apparatus may include a radiating water tank or a condenser.

The cold storage apparatus can store cold energy and release cold energy when needed. For example, the cold storage apparatus can store cold energy and release cold energy when the battery or the like needs to be cooled down, thereby cooling the battery or the like.

The refrigerant system uses a refrigerant such as ammonia, water, or brine, as a medium, and achieves heat transfer through evaporation and condensation of the refrigerant, thereby cooling the battery. The refrigerant can flow directly through the battery to cool the battery, or the refrigerant can cool a liquid coolant flowing through the battery, thereby cooling the battery.

320. Determine a thermal management strategy of the thermal management system based on the first thermal management parameter information.

For example, when the temperature of the battery is greater than or equal to a target temperature and/or the heating rate of the battery is greater than or equal to a target heating rate, the battery can be cooled, for example, by using one or more of the refrigerant system, the heat dissipation apparatus, or the cold storage apparatus.

In this embodiment of this application, the operation of the thermal management system such as the refrigerant system, heat dissipation apparatus, and cold storage apparatus can be controlled in a rational manner based on parameter information related to the battery temperature, and the battery can be cooled in a rational manner, so that effective cooling and heat dissipation can be performed for the battery, improving performance and service life of the battery.

In some embodiments, the first thermal management parameter information further includes temperature information of the cold storage apparatus.

For example, when the temperature of the cold storage apparatus is low, the cold storage apparatus can release cold energy, such as cooling the battery with the cold storage apparatus; and when the temperature of the cold storage apparatus is high, the cold storage apparatus needs to store cold energy, such as cooling the cold storage apparatus with the thermal management system.

In other words, in this application, the thermal management system can not only cool the battery but also cool the cold storage apparatus, allowing the cold storage apparatus to store cold energy. Therefore, when determining the thermal management strategy of the thermal management system, in addition to considering the parameter information of the battery, the temperature information of the cold storage apparatus may also be considered.

In this embodiment of this application, the operation of the thermal management system such as the refrigerant system, heat dissipation apparatus, and cold storage apparatus can be controlled in a rational manner based on parameter information related to the battery temperature and the temperature information of the cold storage apparatus , and the battery and/or the cold storage apparatus can be cooled in a rational manner, so that effective cooling and heat dissipation can be performed for the battery, improving performance and service life of the battery.

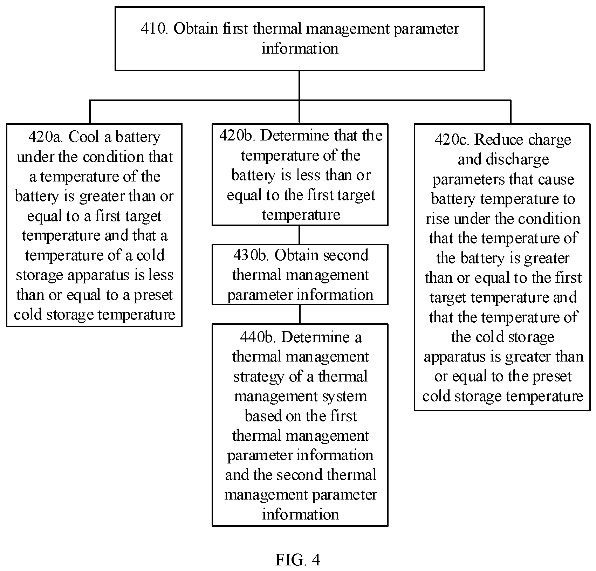

A further exemplary introduction will be made below to a control method for a thermal management system according to an embodiment of this application with reference to FIG. 4 to FIG. 9.

FIG. 4 is a schematic flowchart of a control method for a thermal management system according to an embodiment of this application. The thermal management system includes a liquid coolant system and a refrigerant system, the liquid coolant system including a heat dissipation apparatus and a cold storage apparatus, where the refrigerant system is configured to cool a battery and/or the cold storage apparatus, the heat dissipation apparatus is configured to cool the battery and/or the cold storage apparatus, and the cold storage apparatus is configured to cool the battery.

410. Obtain first thermal management parameter information.

The first thermal management parameter information includes parameter information of the battery and temperature information of the cold storage apparatus. The parameter information of the battery includes temperature information of the battery.

420a. Cool the battery under the condition that a temperature of the battery is greater than or equal to a first target temperature and that a temperature of the cold storage apparatus is less than or equal to a preset cold storage temperature.

When the temperature of the battery is greater than or equal to the first target temperature, the battery needs to be cooled; and when the temperature of the cold storage apparatus is less than or equal to the preset cold storage temperature, the cold storage apparatus does not need to be cooled. The battery has a very high cooling demand, the cold storage apparatus can release cold energy, and the thermal management system can meet the cooling demand of the battery. In this case, the battery can be cooled.

In this embodiment of this application, under the condition that the temperature of the battery is greater than or equal to the first target temperature and that the temperature of the cold storage apparatus is less than or equal to the preset cold storage temperature, that is, the temperature of the battery is high and the temperature of the cold storage apparatus is low, the battery can be cooled so that cooling and heat dissipation are effectively performed for the battery, improving performance and service life of the battery.

420b. Determine that the temperature of the battery is less than or equal to the first target temperature.

430b. Obtain second thermal management parameter information.

The second thermal management parameter information includes parameter information reflecting the heating rate of the battery.

For content of the parameter information reflecting the heating rate of the battery, reference can be made to the relevant description in step 310, and details are not repeated here in this application.

440b. Determine a thermal management strategy of the thermal management system based on the first thermal management parameter information and the second thermal management parameter information.

Under the condition that the temperature of the battery is less than or equal to the first target temperature, in addition to considering the temperature of the battery, the heating rate of the battery should also be considered, that is, considering the parameter information reflecting the heating rate of the battery to determine the cooling demand of the battery. For example, when the battery just starts high-current discharge, the temperature of the battery is low, the heating rate of the battery is high, and the battery needs to be cooled. For example, after the battery has ended discharging for a period of time, the temperature of the battery is low, the heating rate of the battery is also low, and the battery does not need to be cooled.

Under the condition that the temperature of the battery is less than or equal to the first target temperature, the cooling demand of the battery can be determined based on the temperature of the battery and the heating rate of the battery; and the cooling demand of the cold storage apparatus can be determined based on the temperature of the cold storage apparatus. Then, a thermal management strategy of the thermal management system for the battery and the cold storage apparatus can be determined based on the cooling demands of the battery and the cold storage apparatus.

In this embodiment of this application, under the condition that the temperature of the battery is less than or equal to the first target temperature, the thermal management strategy of the thermal management system for the battery and the cold storage apparatus can be determined based on the temperature of the battery, the parameter information reflecting the heating rate of the battery, and the temperature information of the cold storage apparatus. In other words, under the condition that the temperature of the battery is less than or equal to the first target temperature, for the cooling demand of the battery, in addition to considering the temperature of the battery, the parameter information reflecting the heating rate of the battery is also considered. With the cooling demand of the battery being comprehensively considered from different aspects, the thermal management system can be controlled in a more rational manner to cool the battery and/or the cold storage apparatus, and heat dissipation and cooling of the battery can be performed effectively and in a timely manner.

420c. Reduce charge and discharge parameters that cause battery temperature to rise under the condition that the temperature of the battery is greater than or equal to the first target temperature and that the temperature of the cold storage apparatus is greater than or equal to the preset cold storage temperature.

In some embodiments, the charge and discharge parameters that cause battery temperature to rise may include charge and discharge rates of the battery, charge and discharge currents of the battery, charge and discharge voltages of the battery, or charge and discharge powers of the battery. The heating rate of the battery can be reduced by reducing charge and discharge rates of the battery, charge and discharge currents of the battery, charge and discharge voltages of the battery, charge and discharge powers of the battery, or the like. For example, the charge and discharge parameters that cause battery temperature to rise can be reduced to below specific values, and the battery is still in a charge or discharge state, with a slower heating rate of the battery; or the charge and discharge parameters that cause battery temperature to rise can be reduced to stop battery charge and discharge, and the temperature of the battery basically does not continue to rise.

When the temperature of the battery is greater than or equal to the first target temperature, the battery needs to be cooled; and when the temperature of the cold storage apparatus is greater than or equal to the preset cold storage temperature, the cold storage apparatus needs to be cooled and cannot release cold energy. In this case, the temperature of the battery is high, the battery has a very high cooling demand, and the thermal management system may not be able to meet the cooling demand of the battery under the condition that the temperature of the cold storage apparatus is high. In this case, the charge and discharge parameters that cause battery temperature to rise can be reduced, such as by reducing the charge and discharge currents of the battery, to reduce the heating rate of the battery.

In this embodiment of this application, under the condition that the temperature of the battery is greater than or equal to the first target temperature and that the temperature of the cold storage apparatus is greater than or equal to the preset cold storage temperature, both the battery and the cold storage apparatus need to be cooled, the battery has a very high cooling demand, and the thermal management system cannot meet the cooling demand of the battery under the condition that the cold storage apparatus cannot release cold energy. The charge and discharge parameters that cause battery temperature to rise can be reduced, reducing the heating rate of the battery, so that the battery can charge and discharge within a normal temperature range or stop charging and discharging, which reduces the impact of excessively high battery temperature on the battery and improves performance and service life of the battery, thereby enhancing the performance and service life of the electric device.

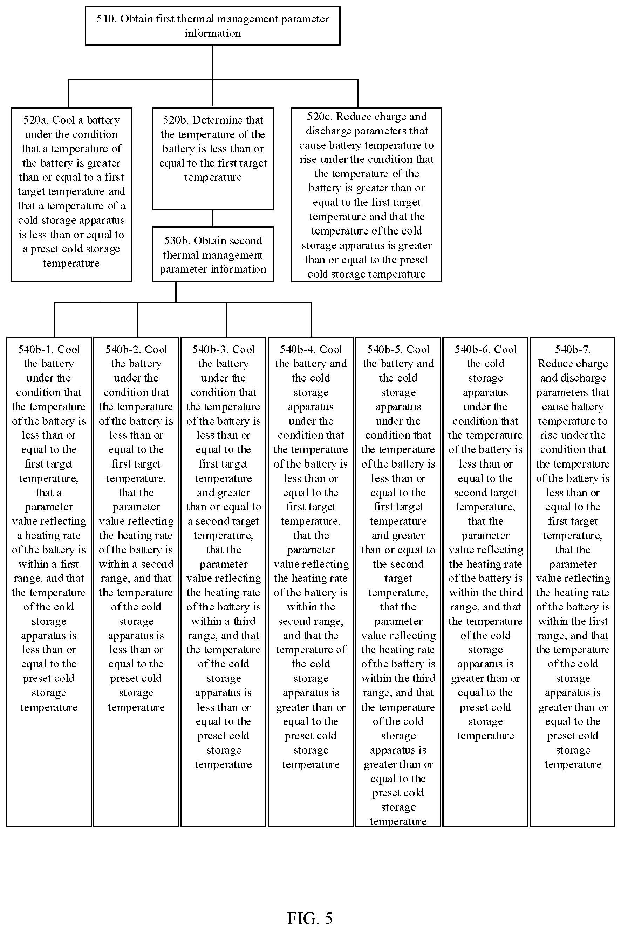

FIG. 5 is a schematic flowchart of a control method for a thermal management system according to an embodiment of this application. The thermal management system includes a liquid coolant system and a refrigerant system, the liquid coolant system including a heat dissipation apparatus and a cold storage apparatus, where the refrigerant system is configured to cool a battery and/or the cold storage apparatus, the heat dissipation apparatus is configured to cool the battery and/or the cold storage apparatus, and the cold storage apparatus is configured to cool the battery.

510. Obtain first thermal management parameter information.

The first thermal management parameter information includes parameter information of the battery and temperature information of the cold storage apparatus. The parameter information of the battery includes temperature information of the battery.

520a. Cool the battery under the condition that a temperature of the battery is greater than or equal to a first target temperature and that a temperature of the cold storage apparatus is less than or equal to a preset cold storage temperature.

520b. Determine that the temperature of the battery is less than or equal to the first target temperature.

530b. Obtain second thermal management parameter information.

The second thermal management parameter information includes parameter information reflecting the heating rate of the battery.

The parameter information reflecting the heating rate of the battery includes information on the temperature rise rate of the battery, information on charge and discharge rates of the battery, information on charge and discharge currents of the battery, information on charge and discharge voltages of the battery, or information on charge and discharge powers of the battery.

For content of step 510 to step 530b, reference can be made to the relevant description in step 410 to step 430b, and details are not repeated here in this application.

In the following step 540b, the temperature of the battery is divided into three levels based on the first target temperature and the second target temperature: low, medium, and high, where the first target temperature is greater than or equal to the second target temperature. When the temperature of the battery is greater than or equal to the first target temperature, the temperature of the battery is high; when the temperature of the battery is greater than or equal to the second target temperature and less than or equal to the first target temperature, the temperature of the battery is medium; and when the temperature of the battery is less than or equal to the second target temperature, the temperature of the battery is low.

Similarly, in the following step 540b, the heating rate of the battery is divided into three levels based on a first range, a second range, and a third range: slow, medium, and fast. When the parameter value reflecting the heating rate of the battery is within the first range, the second range, and the third range, the heating rates of the battery are V1, V2, and V3, respectively, where V1 ≥ V2 ≥ V3. To be specific, when the parameter value reflecting the heating rate of the battery is within the first range, the heating rate of the battery is fast; when the parameter value reflecting the heating rate of the battery is within the second range, the heating rate of the battery is medium; and when the parameter value reflecting the heating rate of the battery is within the third range, the heating rate of the battery is slow.

540b-1. Cool the battery under the condition that the temperature of the battery is less than or equal to the first target temperature, that a parameter value reflecting the heating rate of the battery is within the first range, and that the temperature of the cold storage apparatus is less than or equal to the preset cold storage temperature.

The temperature of the battery is medium or low, the heating rate of the battery is high, and the battery needs to be cooled; and the temperature of the cold storage apparatus is low, and the cold storage apparatus does not need to be cooled. For example, when the battery just starts high-current discharge, the temperature of the battery is low, the heating rate of the battery is high, and the battery needs to be cooled, and the temperature of the cold storage apparatus is low, and the cold storage apparatus does not need to be cooled. The cooling demand of the battery is high, the cold storage apparatus can release cold energy, and the thermal management system can meet the cooling demand of the battery. In this case, the battery can be cooled.

540b-2. Cool the battery under the condition that the temperature of the battery is less than or equal to the first target temperature, that the parameter value reflecting the heating rate of the battery is within the second range, and that the temperature of the cold storage apparatus is less than or equal to the preset cold storage temperature.

The temperature of the battery is medium or low, the heating rate of the battery is medium, and the battery needs cooling; the temperature of the cold storage apparatus is low, and the cold storage apparatus does not need to be cooled. For example, after discharging with a small current for a specific period of time, the battery continues to discharge with the small current, the temperature of the battery is medium, the heating rate of the battery is medium, and the battery needs to be cooled; and the temperature of the cold storage apparatus is low, and the cold storage apparatus does not need to be cooled. The battery needs to be cooled, the cooling demand of the battery is not high, and the thermal management system can meet the cooling demand of the battery. In this case, only the battery can be cooled.

540b-3. Cool the battery under the condition that the temperature of the battery is less than or equal to the first target temperature and greater than or equal to the second target temperature, that the parameter value reflecting the heating rate of the battery is within the third range, and that the temperature of the cold storage apparatus is less than or equal to the preset cold storage temperature.

The temperature of the battery is medium, the heating rate of the battery is low, and the battery needs to be cooled; and the temperature of the cold storage apparatus is low, and the cold storage apparatus does not need to be cooled. The battery needs to be cooled, the cooling demand of the battery is not particularly high, and the thermal management system can meet the cooling demand of the battery. In this case, the battery can be cooled.

540b-4. Cool the battery and the cold storage apparatus under the condition that the temperature of the battery is less than or equal to the first target temperature, that the parameter value reflecting the heating rate of the battery is within the second range, and that the temperature of the cold storage apparatus is greater than or equal to the preset cold storage temperature.

The temperature of the battery is medium or low, the heating rate of the battery is medium, and the battery needs to be cooled; and the temperature of the cold storage apparatus is high, and the cold storage apparatus also needs to be cooled. In this case, the cooling demand of the battery is not high, and the thermal management system can also cool the cold storage apparatus while meeting the cooling demand of the battery.

Therefore, in this case, the thermal management system can cool the battery and the cold storage apparatus simultaneously.

In some embodiments, the cold energy generated by the thermal management system preferentially satisfies the cooling demand of the battery, and the excess cold energy is used to cool the cold storage apparatus.

540b-5. Cool the battery and the cold storage apparatus under the condition that the temperature of the battery is less than or equal to the first target temperature and greater than or equal to the second target temperature, that the parameter value reflecting the heating rate of the battery is within the third range, and that the temperature of the cold storage apparatus is greater than or equal to the preset cold storage temperature.

The temperature of the battery is medium, the heating rate of the battery is low, and the battery needs to be cooled; and the temperature of the cold storage apparatus is high, and the cold storage apparatus needs to be cooled. In this case, the cooling demand of the battery is not high. The thermal management system can also cool the cold storage apparatus while meeting the cooling demand of the battery.

Therefore, in this case, the thermal management system can cool the battery and the cold storage apparatus simultaneously.

In some embodiments, the cold energy generated by the thermal management system preferentially satisfies the cooling demand of the battery, and the excess cold energy is used to cool the cold storage apparatus.

540b-6. Cool the cold storage apparatus under the condition that the temperature of the battery is less than or equal to the second target temperature, that the parameter value reflecting the heating rate of the battery is within the third range, and that the temperature of the cold storage apparatus is greater than or equal to the preset cold storage temperature;

The temperature of the battery is low, the heating rate of the battery is low, and the battery does not need to be cooled; and the temperature of the cold storage apparatus is high, and the cold storage apparatus needs to be cooled. In this case, only the cold storage apparatus can be cooled. Through cooling of the cold storage apparatus, the cold storage apparatus stores cold energy and releases cold energy when the battery needs to be cooled.

540b-7. Reduce charge and discharge parameters that cause battery temperature to rise under the condition that the temperature of the battery is less than or equal to the first target temperature, that the parameter value reflecting the heating rate of the battery is within the first range, and that the temperature of the cold storage apparatus is greater than or equal to the preset cold storage temperature.

The temperature of the battery is medium or low, the heating rate of the battery is high, and the battery needs to be cooled and has a very high cooling demand. The temperature of the cold storage apparatus is high, the cold storage apparatus also needs to be cooled, but the cold storage apparatus cannot release cold energy. The thermal management system may not be able to meet the cooling demand of the battery under the condition that the cold storage apparatus cannot release cold energy, so the charge and discharge parameters that cause battery temperature to rise can be reduced.

For the charge and discharge parameters that cause battery temperature to rise and the content of reducing values of these parameters, reference can be made to the relevant description in step 420c, and details are not repeated here in this application.

In this embodiment of this application, under the condition that the temperature of the battery is less than or equal to the first target temperature, that the parameter value reflecting the heating rate of the battery is within the first range, and that the temperature of the cold storage apparatus is greater than or equal to the preset cold storage temperature, both the battery and the cold storage apparatus need to be cooled, the battery has a very high cooling demand, and the thermal management system cannot meet the cooling demand of the battery under the condition that the cold storage apparatus cannot release cold energy. The charge and discharge parameters that cause battery temperature to rise can be reduced, reducing the heating rate of the battery, so that the battery can charge and discharge within a normal temperature range or stop charging and discharging, which reduces the impact of excessively high battery temperature on the battery and improves performance and service life of the battery, thereby enhancing the performance and service life of the electric device.

In some embodiments, under the condition that the temperature of the battery is less than or equal to the second target temperature, that the parameter value reflecting the heating rate of the battery is within the third range, and that the temperature of the cold storage apparatus is less than or equal to the preset cold storage temperature, the temperature of the battery is low, the heating rate of the battery is slow, and the battery does not need to be cooled; and the temperature of the cold storage apparatus is low, and the cold storage apparatus also does not need to be cooled.

520c. Reduce charge and discharge parameters that cause battery temperature to rise under the condition that the temperature of the battery is greater than or equal to the first target temperature and that the temperature of the cold storage apparatus is greater than or equal to the preset cold storage temperature.

For content of step 520c, reference can be made to the relevant description in step 420c, and details are not repeated here in this application.

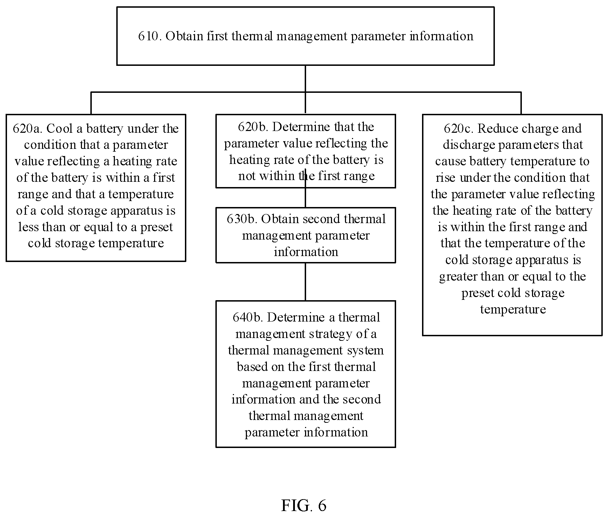

FIG. 6 is a schematic flowchart of a control method for a thermal management system according to an embodiment of this application. The thermal management system includes a liquid coolant system and a refrigerant system, the liquid coolant system including a heat dissipation apparatus and a cold storage apparatus, where the refrigerant system is configured to cool a battery and/or the cold storage apparatus, the heat dissipation apparatus is configured to cool the battery and/or the cold storage apparatus, and the cold storage apparatus is configured to cool the battery.

610. Obtain first thermal management parameter information.

Obtain the first thermal management parameter information. The first thermal management parameter information includes parameter information of the battery and temperature information of the cold storage apparatus. The parameter information of the battery includes parameter information reflecting a heating rate of the battery.

For content of the parameter information reflecting the heating rate of the battery, reference can be made to the relevant description in step 310, and details are not repeated here in this application.

620a. Cool the battery under the condition that a parameter value reflecting the heating rate of the battery is within a first range and that a temperature of the cold storage apparatus is less than or equal to a preset cold storage temperature.

V1 ≥ V23, and V1 and V23 represent heating rates of the battery, respectively reflecting that the heating rate of the battery is within the first range and is not within the first range.

The parameter reflecting the heating rate of the battery within the first range indicates that the heating rate of the battery is high, and the battery needs to be cooled; and the temperature of the cold storage apparatus is less than or equal to the preset cold storage temperature, and the cold storage apparatus does not need to be cooled. The battery has a very high cooling demand, the cold storage apparatus can release cold energy, and the thermal management system can meet the cooling demand of the battery. In this case, the battery can be cooled.

In this embodiment of this application, under the condition that the parameter reflecting the heating rate of the battery is within the first range and that the temperature of the cold storage apparatus is less than or equal to the preset cold storage temperature, that is, under the condition that the heating rate of the battery is high and that the temperature of the cold storage apparatus is low, the battery can be cooled in a timely manner, so that cooling and heat dissipation can be effectively performed for the battery, improving performance and service life of the battery.

620b. Determine that the parameter value reflecting the heating rate of the battery is not within the first range.

630b. Obtain second thermal management parameter information.

The second thermal management parameter information includes temperature information of the battery.

640b. Determine a thermal management strategy of the thermal management system based on the first thermal management parameter information and the second thermal management parameter information.

Under the condition that the parameter value reflecting the heating rate of the battery is not within the first range (that is, the heating rate of the battery is not particularly high), in addition to considering the heating rate of the battery, the temperature of the battery should also be considered to determine the cooling demand of the battery. For example, when the battery ends high-current discharge, the current of the battery is small, the heating rate of the battery is low, the temperature of the battery is high, and the battery needs to be cooled. For example, after the battery has ended discharging for a period of time, the heating rate of the battery is low, the temperature of the battery is low, and the battery does not need to be cooled.

Under the condition that the heating rate of the battery is not particularly high, the cooling demand of the battery can be determined alternatively based on the temperature of the battery; and the cooling demand of the cold storage apparatus can be determined based on the temperature of the cold storage apparatus. Then, a thermal management strategy of the thermal management system for the battery and the cold storage apparatus can be determined based on the cooling demands of the battery and the cold storage apparatus.

In this embodiment of this application, under the condition that the parameter value reflecting the heating rate of the battery is not within the first range, the thermal management strategy of the thermal management system for the battery and the cold storage apparatus can be determined based on the parameter information reflecting the heating rate of the battery, the temperature of the battery, and the temperature of the cold storage apparatus. In other words, under the condition that the heating rate of the battery is not particularly high, for the cooling demand of the battery, in addition to considering the parameter reflecting the heating rate of the battery, the temperature of the battery is also considered. With the cooling demand of the battery being comprehensively considered from different aspects, such as the heating rate of the battery and the temperature of the battery, the thermal management system can be controlled in a more rational manner to cool the battery and/or the cold storage apparatus, and heat dissipation and cooling of the battery can be performed effectively and in a timely manner.

620c. Reduce charge and discharge parameters that cause battery temperature to rise under the condition that the parameter value reflecting the heating rate of the battery is within the first range and that the temperature of the cold storage apparatus is greater than or equal to the preset cold storage temperature.

In some embodiments, the charge and discharge parameters that cause battery temperature to rise may include charge and discharge rates of the battery, charge and discharge currents of the battery, charge and discharge voltages of the battery, or charge and discharge powers of the battery. The heating rate of the battery can be reduced by reducing charge and discharge rates of the battery, charge and discharge currents of the battery, charge and discharge voltages of the battery, charge and discharge powers of the battery, or the like. For example, the charge and discharge parameters that cause battery temperature to rise can be reduced to below specific values, and the battery is still in a charge or discharge state, with a slower heating rate of the battery; or the charge and discharge parameters that cause battery temperature to rise can be reduced to stop battery charge and discharge, and the temperature of the battery basically does not continue to rise.

When the temperature of the battery is greater than or equal to the first target temperature, the battery needs to be cooled; and when the temperature of the cold storage apparatus is greater than or equal to the preset cold storage temperature, the cold storage apparatus needs to be cooled and cannot release cold energy. In this case, the temperature of the battery is high, the battery has a very high cooling demand, and the thermal management system may not be able to meet the cooling demand of the battery under the condition that the temperature of the cold storage apparatus is high. In this case, the charge and discharge parameters that cause battery temperature to rise can be reduced, such as by reducing the charge and discharge currents of the battery, to reduce the heating rate of the battery.

In this embodiment of this application, under the condition that the parameter value reflecting the heating rate of the battery is within the first range and that the temperature of the cold storage apparatus is greater than or equal to the preset cold storage temperature, both the battery and the cold storage apparatus need to be cooled, the battery has a very high cooling demand, and the thermal management system cannot meet the cooling demand of the battery under the condition that the cold storage apparatus cannot release cold energy. The charge and discharge parameters that cause battery temperature to rise can be reduced, reducing the heating rate of the battery, so that the battery can charge and discharge within a normal temperature range or stop charging and discharging, which reduces the impact of excessively high battery temperature on the battery and improves performance and service life of the battery, thereby enhancing the performance and service life of the electric device.

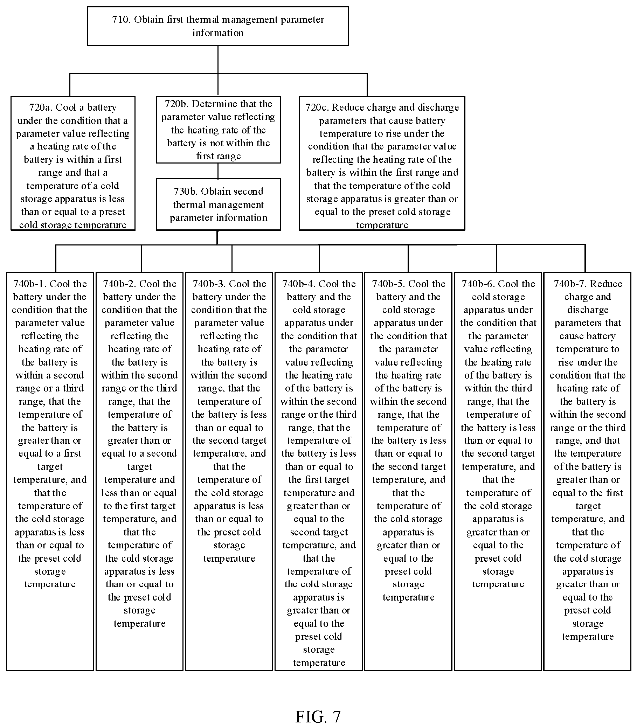

FIG. 7 is a schematic flowchart of a control method for a thermal management system according to an embodiment of this application. The thermal management system includes a liquid coolant system and a refrigerant system, the liquid coolant system including a heat dissipation apparatus and a cold storage apparatus, where the refrigerant system is configured to cool a battery and/or the cold storage apparatus, the heat dissipation apparatus is configured to cool the battery and/or the cold storage apparatus, and the cold storage apparatus is configured to cool the battery.

710. Obtain first thermal management parameter information.

Obtain the first thermal management parameter information. The first thermal management parameter information includes parameter information of the battery and temperature information of the cold storage apparatus. The parameter information of the battery includes parameter information reflecting a heating rate of the battery.

For content of the parameter information reflecting the heating rate of the battery, reference can be made to the relevant description in step 310, and details are not repeated here in this application.

720a. Cool the battery under the condition that a parameter value reflecting the heating rate of the battery is within a first range and that a temperature of the cold storage apparatus is less than or equal to a preset cold storage temperature.

V1 ≥ V23, and V1 and V23 represent heating rates of the battery, respectively reflecting that the heating rate of the battery is within the first range and is not within the first range.

720b. Determine that the parameter value reflecting the heating rate of the battery is not within the first range.

730b. Obtain second thermal management parameter information.

The second thermal management parameter information includes temperature information of the battery.

For content of step 720a, step 720b, and step 730b, reference can be made to the relevant description in step 620a, step 620b, and step 630b, and details are not repeated here in this application.

In some embodiments, when the parameter value reflects that the heating rate of the battery is not within the first range, the parameter value reflecting the heating rate of the battery can be within a second range or a third range.

In the following step 740b, the heating rate of the battery is divided into three levels based on the first range, the second range, and the third range: slow, medium, and fast. When the parameter value reflecting the heating rate of the battery is within the first range, the second range, and the third range, the heating rates of the battery are V1, V2, and V3, respectively, where V1 ≥ V2 ≥ V3. To be specific, when the parameter value reflecting the heating rate of the battery is within the first range, the heating rate of the battery is fast; when the parameter value reflecting the heating rate of the battery is within the second range, the heating rate of the battery is medium; and when the parameter value reflecting the heating rate of the battery is within the third range, the heating rate of the battery is slow.

Similarly, in the following step 740b, the temperature of the battery is divided into three levels based on a first target temperature and a second target temperature: low, medium, and high, where the first target temperature is greater than or equal to the second target temperature. When the temperature of the battery is greater than or equal to the first target temperature, the temperature of the battery is high; when the temperature of the battery is greater than or equal to the second target temperature and less than or equal to the first target temperature, the temperature of the battery is medium; and when the temperature of the battery is less than or equal to the second target temperature, the temperature of the battery is high.

740b-1. Cool the battery under the condition that the parameter value reflecting the heating rate of the battery is within the second range or the third range, that the temperature of the battery is greater than or equal to the first target temperature, and that the temperature of the cold storage apparatus is less than or equal to the preset cold storage temperature.

The heating rate of the battery is medium or low, the temperature of the battery is high, and the battery needs to be cooled; and the temperature of the cold storage apparatus is low, and the cold storage apparatus does not need to be cooled. For example, when the battery changes from high-current discharge to small current discharge, the heating rate of the battery is medium, and the temperature of the battery is high; and the temperature of the cold storage apparatus is low, and the cold storage apparatus does not need to be cooled. The cooling demand of the battery is high, the cold storage apparatus can release cold energy, and the thermal management system can meet the cooling demand of the battery. In this case, the battery can be cooled.

740b-2. Cool the battery under the condition that the parameter value reflecting the heating rate of the battery is within the second range or the third range, that the temperature of the battery is greater than or equal to the second target temperature and less than or equal to the first target temperature, and that the temperature of the cold storage apparatus is less than or equal to the preset cold storage temperature.

The heating rate of the battery is medium or low, the temperature of the battery is medium, and the battery needs to be cooled; and the temperature of the cold storage apparatus is low, and the cold storage apparatus does not need to be cooled. For example, after the battery discharges with a small current for a specific period of time, the heating rate of the battery is medium, the temperature of the battery is medium, and the battery needs to be cooled; and the temperature of the cold storage apparatus is low, and the cold storage apparatus does not need to be cooled. The battery needs to be cooled, the cooling demand of the battery is not high, and the thermal management system can meet the cooling demand of the battery. In this case, only the battery can be cooled.

740b-3. Cool the battery under the condition that the parameter value reflecting the heating rate of the battery is within the second range, that the temperature of the battery is less than or equal to the second target temperature, and that the temperature of the cold storage apparatus is less than or equal to the preset cold storage temperature.

The heating rate of the battery is medium, the temperature of the battery is low, and the battery needs to be cooled; and the temperature of the cold storage apparatus is low, and the cold storage apparatus does not need to be cooled. For example, when the battery just starts to discharge with a small current, the heating rate of the battery is medium, the temperature of the battery is low, the battery needs to be cooled, the cooling demand of the battery is not particularly high, and the thermal management system can meet the cooling demand of the battery. In this case, the battery can be cooled.

740b-4. Cool the battery and the cold storage apparatus under the condition that the parameter value reflecting the heating rate of the battery is within the second range or the third range, that the temperature of the battery is less than or equal to the first target temperature and greater than or equal to the second target temperature, and that the temperature of the cold storage apparatus is greater than or equal to the preset cold storage temperature.

The heating rate of the battery is medium or low, the temperature of the battery is medium, and the battery needs to be cooled; and the temperature of the cold storage apparatus is high, and the cold storage apparatus also needs to be cooled. In this case, it can be considered that the battery needs to be cooled and that the cooling demand of the battery is not high, the thermal management system can also cool the cold storage apparatus while meeting the cooling demand of the battery.

Therefore, in this case, the thermal management system can cool the battery and the cold storage apparatus simultaneously.

In some embodiments, the cold energy generated by the thermal management system preferentially satisfies the cooling demand of the battery, and the excess cold energy is used to cool the cold storage apparatus.

740b-5. Cool the battery and the cold storage apparatus under the condition that the parameter value reflecting the heating rate of the battery is within the second range, that the temperature of the battery is less than or equal to the second target temperature, and that the temperature of the cold storage apparatus is greater than or equal to the preset cold storage temperature.

The heating rate of the battery is medium, the temperature of the battery is low, and the battery needs to be cooled; and the temperature of the cold storage apparatus is high, and the cold storage apparatus also needs to be cooled. In this case, the cooling demand of the battery is not high, and the thermal management system can also cool the cold storage apparatus while meeting the cooling demand of the battery.

Therefore, in this case, the thermal management system can cool the battery and the cold storage apparatus simultaneously.

In some embodiments, the cold energy generated by the thermal management system preferentially satisfies the cooling demand of the battery, and the excess cold energy is used to cool the cold storage apparatus.

740b-6. Cool the cold storage apparatus under the condition that the parameter value reflecting the heating rate of the battery is within the third range, that the temperature of the battery is less than or equal to the second target temperature, and that the temperature of the cold storage apparatus is greater than or equal to the preset cold storage temperature.

The heating rate of the battery is low, the temperature of the battery is low, and the battery does not need to be cooled; and the temperature of the cold storage apparatus is high, and the cold storage apparatus needs to be cooled. In this case, only the cold storage apparatus can be cooled. Through cooling of the cold storage apparatus, the cold storage apparatus stores cold energy so that an energy storage system can release cold energy when the battery needs to be cooled.

740b-7. Reduce charge and discharge parameters that cause battery temperature to rise under the condition that the heating rate of the battery is within the second range or the third range, and that the temperature of the battery is greater than or equal to the first target temperature, and that the temperature of the cold storage apparatus is greater than or equal to the preset cold storage temperature.

The heating rate of the battery is medium or low, the temperature of the battery is high, and the battery needs to be cooled and has a very high cooling demand. The temperature of the cold storage apparatus is high, the cold storage apparatus also needs to be cooled, but the cold storage apparatus cannot release cold energy. The thermal management system may not be able to meet the cooling demand of the battery under the condition that the cold storage apparatus cannot release cold energy, so the charge and discharge parameters that cause battery temperature to rise can be reduced.

For the charge and discharge parameters that cause battery temperature to rise and the content of reducing values of these parameters, reference can be made to the relevant description in step 620c, and details are not repeated here in this application.

In some embodiments, under the condition that the parameter value reflecting the heating rate of the battery is within the third range, that the temperature of the battery is less than or equal to the second target temperature, and that the temperature of the cold storage apparatus is less than or equal to the preset cold storage temperature, the heating rate of the battery is slow, the temperature of the battery is low, and the battery does not need to be cooled; and the temperature of the cold storage apparatus is low, and the cold storage apparatus also does not need to be cooled.

720c. Reduce charge and discharge parameters that cause battery temperature to rise under the condition that the parameter value reflecting the heating rate of the battery is within the first range and that the temperature of the cold storage apparatus is greater than or equal to the preset cold storage temperature.

For content of step 720c, reference can be made to the relevant description in step 620c, and details are not repeated here in this application.

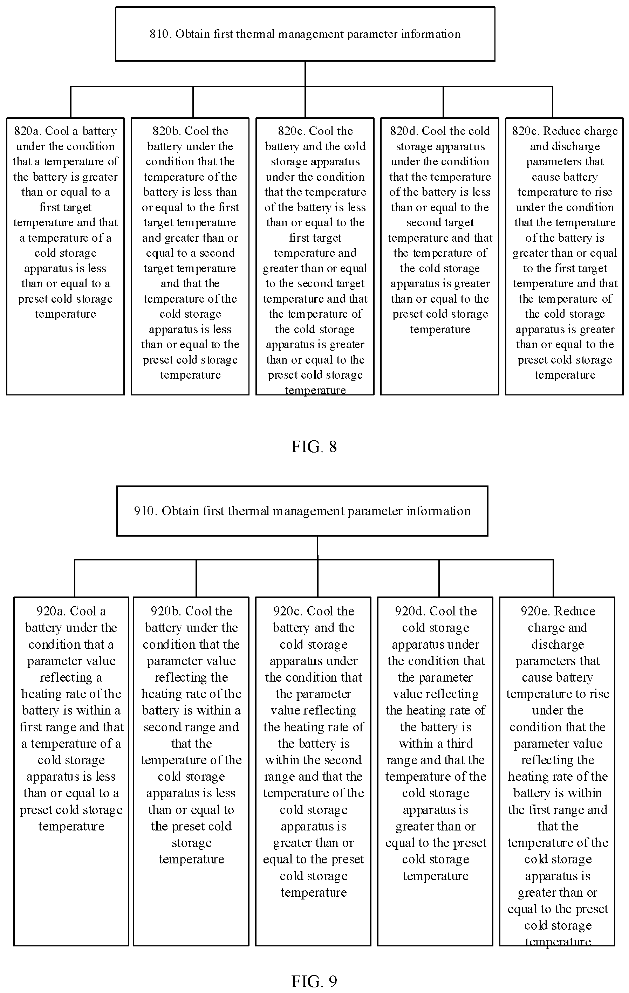

FIG. 8 is a schematic flowchart of a control method for a thermal management system according to an embodiment of this application. The thermal management system includes a liquid coolant system and a refrigerant system, the liquid coolant system including a heat dissipation apparatus and a cold storage apparatus, where the refrigerant system is configured to cool a battery and/or the cold storage apparatus, the heat dissipation apparatus is configured to cool the battery and/or the cold storage apparatus, and the cold storage apparatus is configured to cool the battery.

810. Obtain first thermal management parameter information.

The first thermal management parameter information includes parameter information of the battery and temperature information of the cold storage apparatus. The parameter information of the battery includes temperature information of the battery.

For content of step 810, reference can be made to the relevant description in step 310, and details are not repeated here in this application.

In the following step 820, the temperature of the battery is divided into three levels based on a first target temperature and a second target temperature: low, medium, and high, where the first target temperature is greater than or equal to the second target temperature. When the temperature of the battery is greater than or equal to the first target temperature, the temperature of the battery is high; when the temperature of the battery is greater than or equal to the second target temperature and less than or equal to the first target temperature, the temperature of the battery is medium; and when the temperature of the battery is less than or equal to the second target temperature, the temperature of the battery is high.

820a. Cool the battery under the condition that the temperature of the battery is greater than or equal to the first target temperature and that a temperature of the cold storage apparatus is less than or equal to a preset cold storage temperature.

The temperature of the battery is high, and the battery needs to be cooled and has a very high cooling demand; and the temperature of the cold storage apparatus is low, the cold storage apparatus does not need to be cooled and can release cold energy. In this case, the thermal management system can meet the cooling demand of the battery and cool the battery.

820b. Cool the battery under the condition that the temperature of the battery is greater than or equal to the second target temperature and less than or equal to the first target temperature and that the temperature of the cold storage apparatus is less than or equal to the preset cold storage temperature.

The temperature of the battery is medium, and the battery needs to be cooled; and the temperature of the cold storage apparatus is low, and the cold storage apparatus does not need to be cooled. The cooling demand of the battery is not very high, and the thermal management system can meet the current cooling demand of the battery. In this case, the battery can be cooled.

820c. Cool the battery and the cold storage apparatus under the condition that the temperature of the battery is greater than or equal to the second target temperature and less than or equal to the first target temperature and that the temperature of the cold storage apparatus is greater than or equal to the preset cold storage temperature.

The temperature of the battery is medium, and the battery needs to be cooled; and the temperature of the cold storage apparatus is high, and the cold storage apparatus needs to be cooled. In this case, the cooling demand of the battery is not high, and the thermal management system can also cool the cold storage apparatus while meeting the cooling demand of the battery.

Therefore, in this case, the thermal management system can cool the battery and the cold storage apparatus simultaneously. The cold energy generated by the thermal management system preferentially satisfies the cooling demand of the battery, and the excess cold energy is used to cool the cold storage apparatus.

820d. Cool the cold storage apparatus under the condition that the temperature of the battery is less than or equal to the second target temperature and that the temperature of the cold storage apparatus is greater than or equal to the preset cold storage temperature.

The temperature of the battery is low, and the battery does not need to be cooled; and the temperature of the cold storage apparatus is high, and the cold storage apparatus needs to be cooled. In this case, only the cold storage apparatus can be cooled.

In this embodiment of this application, the thermal management strategy of the thermal management system for the battery and the cold storage apparatus can be determined based on the temperature information of the battery and the temperature information of the cold storage apparatus. Thus, the thermal management of the thermal management system for the battery and the cold storage apparatus can be controlled in a rational manner, so that effective cooling and heat dissipation can be performed for the battery, improving performance and service life of the battery.

820e. Reduce charge and discharge parameters that cause battery temperature to rise under the condition that the temperature of the battery is greater than or equal to the first target temperature and that the temperature of the cold storage apparatus is greater than or equal to the preset cold storage temperature.

For content of step 820e, reference can be made to the relevant content in step 420c, and details are not repeated here in this application.

In some embodiments, under the condition that the temperature of the battery is less than or equal to the second target temperature and that the temperature of the cold storage apparatus is less than or equal to the preset cold storage temperature, the temperature of the battery is low, the temperature of the cold storage apparatus is also low, and both the battery and the thermal management system do not need to be cooled.

FIG. 9 is a schematic flowchart of a control method for a thermal management system according to an embodiment of this application. The thermal management system includes a liquid coolant system and a refrigerant system, the liquid coolant system including a heat dissipation apparatus and a cold storage apparatus, where the refrigerant system is configured to cool a battery and/or the cold storage apparatus, the heat dissipation apparatus is configured to cool the battery and/or the cold storage apparatus, and the cold storage apparatus is configured to cool the battery.

910. Obtain first thermal management parameter information.

Obtain the first thermal management parameter information. The first thermal management parameter information includes parameter information of the battery and temperature information of the cold storage apparatus. The parameter information of the battery includes parameter information reflecting a heating rate of the battery.

For content of step 910, reference can be made to the relevant description in step 310, and details are not repeated here in this application.

In the following step 920, the heating rate of the battery is divided into three levels based on a first range, a second range, and a third range: slow, medium, and fast. When the parameter value reflecting the heating rate of the battery is within the first range, the second range, and the third range, the heating rates of the battery are V1, V2, and V3, respectively, where V1 ≥ V2 ≥ V3. To be specific, when the parameter value reflecting the heating rate of the battery is within the first range, the heating rate of the battery is fast; when the parameter value reflecting the heating rate of the battery is within the second range, the heating rate of the battery is medium; and when the parameter value reflecting the heating rate of the battery is within the third range, the heating rate of the battery is slow.

920a. Cool the battery under the condition that a parameter value reflecting the heating rate of the battery is within a first range and that a temperature of the cold storage apparatus is less than or equal to a preset cold storage temperature.

The heating rate of the battery is fast, and the battery needs to be cooled; and the temperature of the cold storage apparatus is low, and the cold storage apparatus does not need to be cooled. The battery has a very high cooling demand, the cold storage apparatus can release cold energy, and the thermal management system can meet the cooling demand of the battery and can cool the battery in this case.

920b. Cool the battery under the condition that the parameter value reflecting the heating rate of the battery is within the second range and that the temperature of the cold storage apparatus is less than or equal to the preset cold storage temperature.

The heating rate of the battery is medium, and the battery needs to be cooled; and the temperature of the cold storage apparatus is low, and the cold storage apparatus does not need to be cooled. The cooling demand of the battery is not high, and the thermal management system can meet the current cooling demand of the battery. In this case, the battery can be cooled.

920c. Cool the battery and the cold storage apparatus under the condition that the parameter value reflecting the heating rate of the battery is within the second range and that the temperature of the cold storage apparatus is greater than or equal to the preset cold storage temperature.

The heating rate of the battery is medium, and the battery needs to be cooled; and the temperature of the cold storage apparatus is high, and the cold storage apparatus needs to be cooled. In this case, it can be considered that the cooling demand of the battery is not high, and the thermal management system can also cool the cold storage apparatus while meeting the cooling demand of the battery.

Therefore, in this case, the thermal management system can cool the battery and the cold storage apparatus simultaneously.

In some embodiments, the cold energy generated by the thermal management system preferentially satisfies the cooling demand of the battery, and the excess cold energy is used to cool the cold storage apparatus.

920d. Cool the cold storage apparatus under the condition that the parameter value reflecting the heating rate of the battery is within the third range and that the temperature of the cold storage apparatus is greater than or equal to the preset cold storage temperature.

The heating rate of the battery is low, and the battery does not need to be cooled; and the temperature of the cold storage apparatus is high, and the cold storage apparatus needs to be cooled. In this case, only the cold storage apparatus can be cooled.

920e. Reduce charge and discharge parameters that cause battery temperature to rise under the condition that the parameter value reflecting the heating rate of the battery is within the first range and that the temperature of the cold storage apparatus is greater than or equal to the preset cold storage temperature.

For content of step 920e, reference can be made to the relevant content in step 620c, and details are not repeated here in this application.

In this embodiment of this application, the thermal management strategy of the thermal management system for the battery and the cold storage apparatus can be determined based on the parameter information reflecting the heating rate of the battery and the temperature information of the cold storage apparatus. Thus, the thermal management of the thermal management system for the battery and the cold storage apparatus can be controlled in a rational manner, so that effective cooling and heat dissipation can be performed for the battery, improving performance and service life of the battery.

In some embodiments, under the condition that the parameter value reflecting the heating rate of the battery is within the third range and that the temperature of the cold storage apparatus is less than or equal to the preset cold storage temperature, the heating rate of the battery is slow, the temperature of the cold storage apparatus is low, and both the battery and the cold storage apparatus do not need to be cooled.

In some embodiments, the first thermal management parameter further includes information about ambient temperature. In cooling the battery and/or the cold storage apparatus, the ambient temperature may also be considered.

In this application, ambient temperature refers to a temperature of the environment in which the battery and/or the cold storage apparatus is located. The ambient temperature may be a temperature within the system/device in which the battery and/or the cold storage apparatus is located, such as a temperature within an integrated energy storage and charging system, or it may be a temperature outside the system/device in which the battery or the cold storage apparatus is located, such as a temperature outside the integrated energy storage and charging system.

For the heat dissipation apparatus, it can exchange heat with the environment, such as quickly transferring absorbed heat into the environment. When the heat dissipation apparatus dissipates heat to the environment, a lower ambient temperature is more conducive to the heat dissipation of the heat dissipation apparatus; and a higher ambient temperature is less conducive to the heat dissipation into the heat dissipation environment.

In some embodiments, in cooling the battery as described in FIG. 4 to FIG. 9, the refrigerant system and the cold storage apparatus can be used to cool the battery under the condition that the ambient temperature is greater than or equal to a first ambient temperature; or the heat dissipation apparatus and the cold storage apparatus can be used to cool the battery under the condition that the ambient temperature is less than or equal to the first ambient temperature.

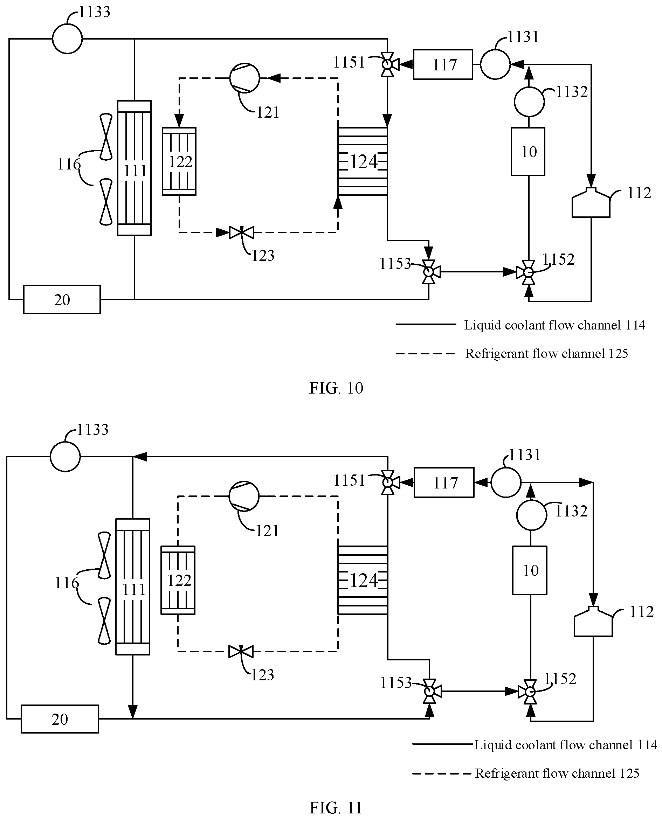

As shown in FIG. 10, when a refrigerant system 120 and a cold storage apparatus 112 are used to cool a battery 10, a compressor 121 can compress a low-pressure gaseous refrigerant into a high-pressure gaseous refrigerant and discharge the high-pressure gaseous refrigerant, which flows into a condenser 122 through a refrigerant flow channel. The condenser 122 converts the high-pressure gaseous refrigerant into a high-pressure liquid refrigerant, which is then depressurized by an expansion valve 123 and converted into a low-pressure liquid refrigerant. The low-pressure liquid refrigerant flows into an evaporator 124 through the refrigerant flow channel.

Under the action of a second pump 1132, a portion of the high-temperature liquid coolant flowing through the battery 10 passes through a first three-way valve 1151 and flows into the evaporator 124, where the high-temperature liquid coolant exchanges heat with the low-pressure liquid refrigerant, the high-temperature liquid coolant releases heat and is converted into a low-temperature liquid coolant, and the low-pressure liquid refrigerant absorbs heat and is converted into a low-pressure gaseous refrigerant. The low-pressure gaseous refrigerant may continue to flow into the compressor 121 through the refrigerant flow channel 125 for compression, thereby completing a refrigerant cycle process; and the low-temperature liquid coolant flows into the battery 10 through a third three-way valve 1153 and a second three-way valve 1152 to cool the battery 10.

Under the action of the second pump 1132, another portion of the high-temperature liquid coolant flowing through the battery 10 flows to the cold storage apparatus 112. The high-temperature liquid coolant exchanges heat with the cold storage apparatus 112 and is converted into a low-temperature liquid coolant, which then flows to the battery 10 through the second three-way valve 1152 to cool the battery 10.

As shown in FIG. 11, when a heat dissipation apparatus 111 and a cold storage apparatus 112 are used to cool a battery, under the action of a second pump 1132, a portion of a high-temperature liquid coolant flowing through the battery 10 flows through a first three-way valve 1151 and then into a heat dissipation apparatus 111. The heat dissipation apparatus 111 dissipates heat into the environment, converting the high-temperature liquid coolant into a low-temperature liquid coolant. The low-temperature liquid coolant flows to the battery 10 through a third three-way valve 1153 and a second three-way valve 1152 to cool the battery 10. Under the action of the second pump 1132, another portion of the high-temperature liquid coolant flowing through the battery 10 flows to the cold storage apparatus 112. The high-temperature liquid coolant exchanges heat with the cold storage apparatus 112 and is converted into a low-temperature liquid coolant, which then flows to the battery 10 through the second three-way valve 1152 to cool the battery 10.

In this embodiment of this application, when the battery needs to be cooled, the refrigerant system and the cold storage apparatus or the heat dissipation apparatus and the cold storage apparatus can be selected based on the ambient temperature to dissipate heat for the battery, so that effective cooling and heat dissipation can be performed for the battery. In addition, besides using the refrigerant system or the heat dissipation apparatus to cool the battery, the cold storage apparatus can be used to cool the battery, reducing the cooling capability requirements for the refrigerant system and the heat dissipation apparatus to some extent.

Optionally, in some embodiments, the cooling demand of the battery can be considered in cooling the battery.

If the battery has a very high cooling demand, the refrigerant system and the cold storage apparatus can be controlled to cool the battery under the condition that the ambient temperature is greater than or equal to a first ambient temperature; or the heat dissipation apparatus and the cold storage apparatus can be controlled to cool the battery under the condition that the ambient temperature is less than or equal to the first ambient temperature.

For example, the battery in steps 420a, 520a, 540b-1, 620a, 720a, 740b-1, 820a, or 920a can be considered to have a very high cooling demand.

If the battery has a relatively low cooling demand, the refrigerant system can be controlled to cool the battery under the condition that the ambient temperature is greater than or equal to the first ambient temperature; or the heat dissipation apparatus can be controlled to cool the battery under the condition that the ambient temperature is less than or equal to the first ambient temperature.

For example, the battery in steps 540b-2, 540b-3, 740b-2, 740b-3, 820b, or 920b can be considered to have a relatively low cooling demand.

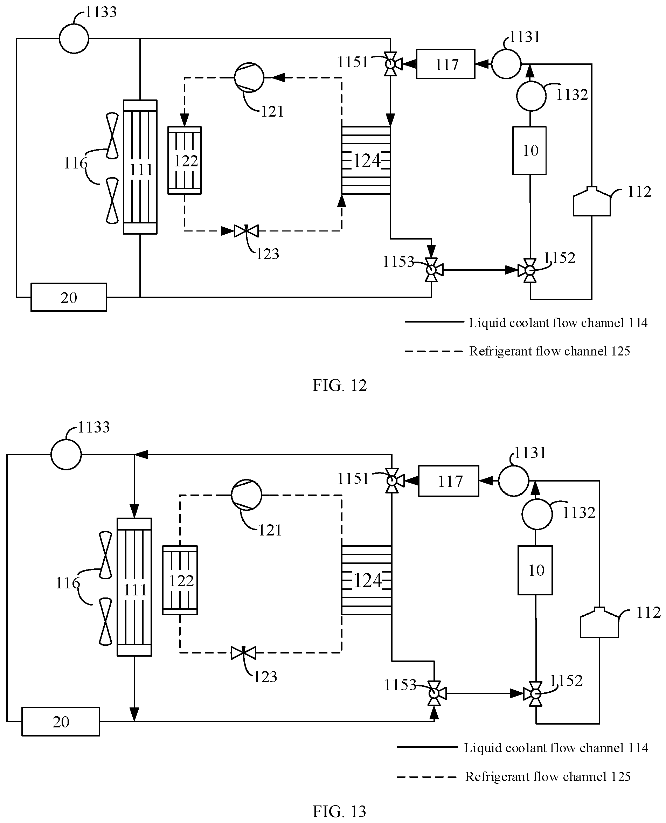

As shown in FIG. 12, when a refrigerant system 120 is used to cool a battery 10, a compressor 121 can compress a low-pressure gaseous refrigerant into a high-pressure gaseous refrigerant and discharge the high-pressure gaseous refrigerant, which flows into a condenser 122 through a refrigerant flow channel. The condenser 122 converts the high-pressure gaseous refrigerant into a high-pressure liquid refrigerant, which is then depressurized by an expansion valve 123 and converted into a low-pressure liquid refrigerant. The low-pressure liquid refrigerant flows into an evaporator 124 through the refrigerant flow channel.

Under the action of a first pump 1131 or a second pump 1132, the high-temperature liquid coolant flowing through the battery 10 passes through a first three-way valve 1151 and flows into the evaporator 124, where the high-temperature liquid coolant exchanges heat with the low-pressure liquid refrigerant, the high-temperature liquid coolant is converted into a low-temperature liquid coolant, and the low-pressure liquid refrigerant is converted into a low-pressure gaseous refrigerant.

The low-temperature liquid coolant flows into the battery 10 through a third three-way valve 1153 and a second three-way valve 1152 to cool the battery 10. The low-pressure gaseous refrigerant may continue to flow into the compressor 121 through the refrigerant flow channel 125 for compression, thereby completing a refrigerant cycle process.

As shown in FIG. 13, when a heat dissipation apparatus 111 is used to cool a battery 10, under the action of a first pump 1131 and a second pump 1132, a high-temperature liquid coolant flowing through the battery 10 flows to the heat dissipation apparatus 111 through a first three-way valve 1151. The heat dissipation apparatus 111 exchanges heat with the environment to convert the high-temperature liquid coolant into a low-temperature liquid coolant. The low-temperature liquid coolant flows to the battery 10 through a third three-way valve 1153 and a second three-way valve 1152 to cool the battery 10.

In this embodiment of this application, under the condition that the cooling demand of the battery is not high, the refrigerant system or the heat dissipation apparatus can be selected based on the ambient temperature to cool the battery, which can save the energy consumption of the thermal management system to some extent while performing effective cooling and heat dissipation for the battery, improving performance and service life of the battery.

Alternatively, if the battery has a relatively low cooling demand, the cold storage apparatus can be controlled to cool the battery without considering the ambient temperature.

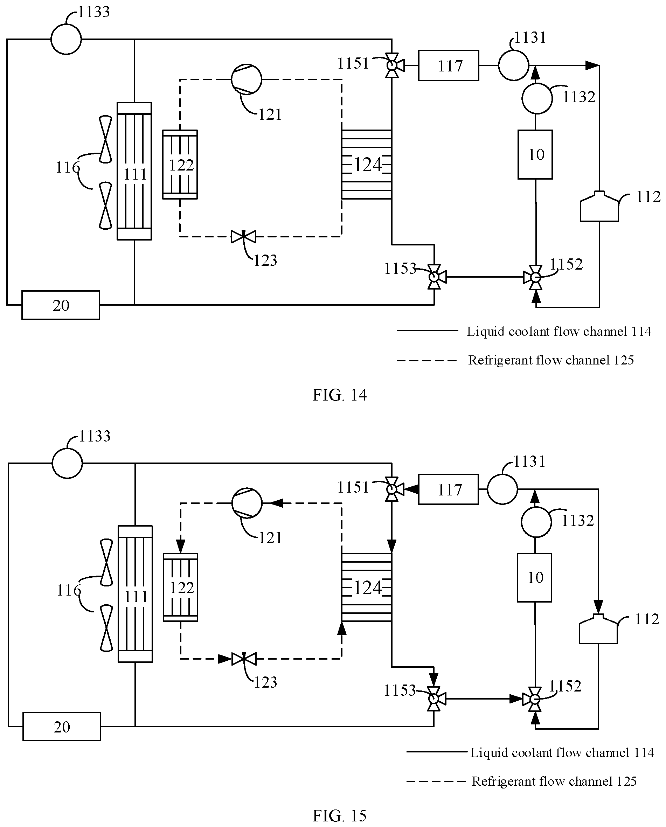

As shown in FIG. 14, when a cold storage apparatus 112 cools a battery 10, under the action of a second pump 1132, a high-temperature liquid coolant flowing through the battery 10 flows to the cold storage apparatus 112. The high-temperature liquid coolant exchanges heat with the cold storage apparatus and is converted into a low-temperature liquid coolant, which flows to the battery 10 through a second three-way valve 1152 to cool the battery 10.

In this embodiment of this application, under the condition that the cooling demand of the battery is not high, the cold storage apparatus can be used to cool the battery without the need of considering ambient temperature, which can simply the operation of the thermal management system in cooling the battery.

In some embodiments, in cooling the battery and the cold storage apparatus as described in FIG. 5 and FIG. 7 to FIG. 9, the refrigerant system can be used to cool the battery and the cold storage apparatus under the condition that the ambient temperature is greater than or equal to a second ambient temperature; or the heat dissipation apparatus can be used to cool the battery and the cold storage apparatus under the condition that the ambient temperature is less than or equal to the second ambient temperature.

As shown in FIG. 15, when a refrigerant system 120 is used to cool a battery 10 and a cold storage apparatus 112, a compressor 121 can compress a low-pressure gaseous refrigerant into a high-pressure gaseous refrigerant and discharge the high-pressure gaseous refrigerant, which flows into a condenser 122 through a refrigerant flow channel. The condenser 122 converts the high-pressure gaseous refrigerant into a high-pressure liquid refrigerant, which is then depressurized by an expansion valve 123 and converted into a low-pressure liquid refrigerant. The low-pressure liquid refrigerant flows into an evaporator 124 through the refrigerant flow channel.

Under the action of a first pump 1131, the high-temperature liquid coolant flowing through the battery 10 and the cold storage apparatus 112 passes through a first three-way valve 1151 and flows into the evaporator 124, where the high-temperature liquid coolant exchanges heat with the low-pressure liquid refrigerant, the high-temperature liquid coolant is converted into a low-temperature liquid coolant, and the low-pressure liquid refrigerant is converted into a low-pressure gaseous refrigerant.

The low-temperature liquid coolant flows into the battery 10 and the cold storage apparatus 112 through a third three-way valve 1153 and a second three-way valve 1152 to cool the battery 10 and the cold storage apparatus 112. The low-pressure gaseous refrigerant may continue to flow into the compressor 121 through the refrigerant flow channel 125 for compression, thereby completing a refrigerant cycle process.

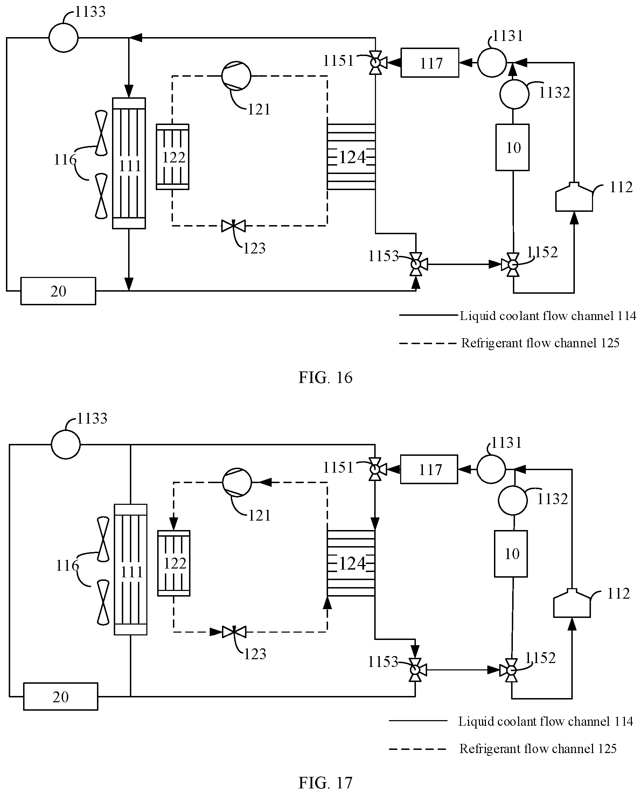

As shown in FIG. 16, when a heat dissipation apparatus 111 is used to cool a battery 10 and a cold storage apparatus 112, under the action of a first pump 1131, a high-temperature liquid coolant flowing through the battery 10 and the cold storage apparatus 112 flows to the heat dissipation apparatus 111 through a first three-way valve 1151. The heat dissipation apparatus 111 exchanges heat with the environment to convert the high-temperature liquid coolant into a low-temperature liquid coolant. The low-temperature liquid coolant flows to the battery 10 and the cold storage apparatus 112 through a third three-way valve 1153 and a second three-way valve 1152 respectively to cool the battery 10 and the cold storage apparatus 112.

In this embodiment of this application, under the condition that the cooling demand of the battery is not high, the refrigerant system or the heat dissipation apparatus can be selected based on the ambient temperature to cool the battery and the cold storage apparatus, which can cool the cold storage apparatus while cooling the battery, allowing the cold storage apparatus to store cold energy in a timely manner and release the cold energy when the battery is in need of cooling.

In some embodiments, in cooling the cold storage apparatus as described in FIG. 5 and FIG. 7 to FIG. 9, the refrigerant system can be used to cool the cold storage apparatus under the condition that the ambient temperature is greater than or equal to a third ambient temperature; or the heat dissipation apparatus can be used to cool the cold storage apparatus under the condition that the ambient temperature is less than or equal to the third ambient temperature.

As shown in FIG. 17, when a refrigerant system 120 is used to cool a cold storage apparatus 112, a compressor 121 can compress a low-pressure gaseous refrigerant into a high-pressure gaseous refrigerant and discharge the high-pressure gaseous refrigerant, which flows into a condenser 122 through a refrigerant flow channel. The condenser 122 converts the high-pressure gaseous refrigerant into a high-pressure liquid refrigerant, which is then depressurized by an expansion valve 123 and converted into a low-pressure liquid refrigerant. The low-pressure liquid refrigerant flows into an evaporator 124 through the refrigerant flow channel.

Under the action of a first pump 1131, the high-temperature liquid coolant flowing through the cold storage apparatus 112 passes through a first three-way valve 1151 and flows into the evaporator 124, where the high-temperature liquid coolant exchanges heat with the low-pressure liquid refrigerant, the high-temperature liquid coolant is converted into a low-temperature liquid coolant, and the low-pressure liquid refrigerant is converted into a low-pressure gaseous refrigerant.

The low-temperature liquid coolant flows into the cold storage apparatus 112 through a third three-way valve 1153 and a second three-way valve 1152 to cool the cold storage apparatus 112. The low-pressure gaseous refrigerant may continue to flow into the compressor 121 through the refrigerant flow channel 125 for compression, thereby completing a refrigerant cycle process.

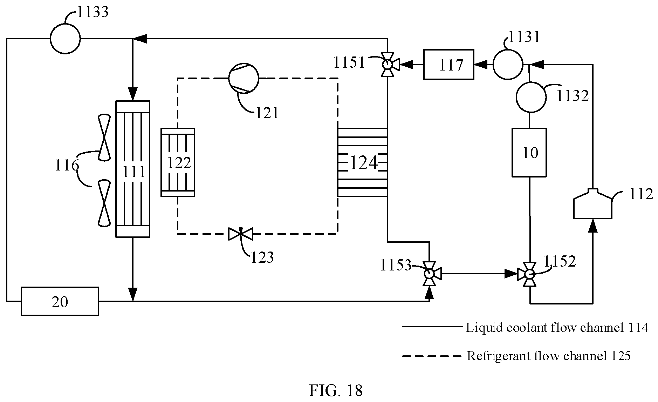

As shown in FIG. 18, when a heat dissipation apparatus 111 is used to cool a cold storage apparatus 112, under the action of a first pump 1131, a high-temperature liquid coolant flowing through the cold storage apparatus 112 flows through a first three-way valve 1151 and then into the heat dissipation apparatus 111. The heat dissipation apparatus 111 dissipates heat into the environment, converting the high-temperature liquid coolant into a low-temperature liquid coolant. The low-temperature liquid coolant flows to the cold storage apparatus 112 through a third three-way valve 1153 and a second three-way valve 1152 to cool the cold storage apparatus 112.

In this embodiment of this application, when a battery does not need to be cooled, a refrigerant system or the heat dissipation apparatus can be selected based on the ambient temperature to cool the cold storage apparatus, which can enable the cold storage apparatus to store cold energy in a timely manner and release the cold energy when the battery is in need of cooling.

It should be understood that in this embodiment of this application, values of the first ambient temperature, the second ambient temperature, and the third ambient temperature may be the same, different, or may be partially the same. The magnitude relationship of the first ambient temperature, the second ambient temperature, and the third ambient temperature is not limited in this application.

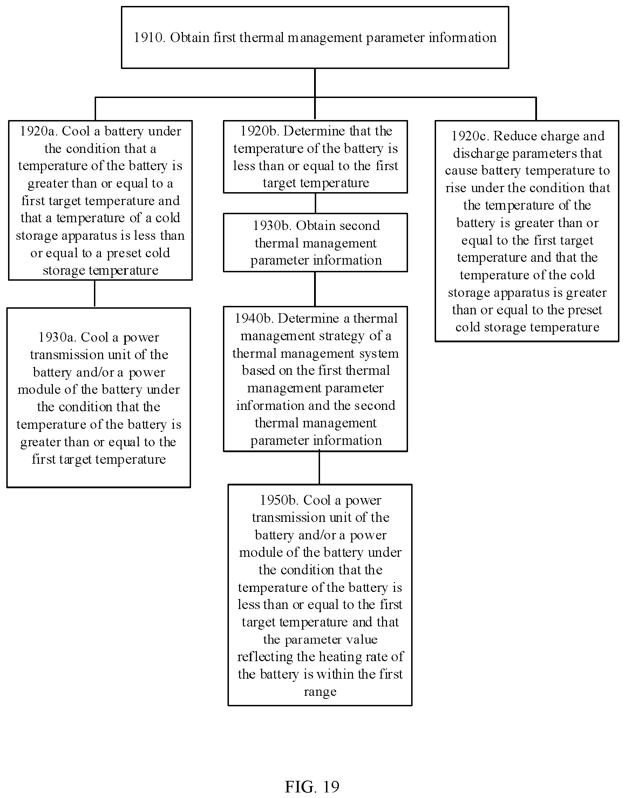

FIG. 19 is a schematic flowchart of a control method for a thermal management system according to an embodiment of this application. The thermal management system includes a liquid coolant system and a refrigerant system, the liquid coolant system including a heat dissipation apparatus and a cold storage apparatus, where the refrigerant system is configured to cool a battery and/or the cold storage apparatus, the heat dissipation apparatus is configured to cool the battery and/or the cold storage apparatus, and the cold storage apparatus is configured to cool the battery.

1910. Obtain first thermal management parameter information.

The first thermal management parameter information includes parameter information of the battery and temperature information of the cold storage apparatus. The parameter information of the battery includes temperature information of the battery.

1920a. Cool the battery under the condition that a temperature of the battery is greater than or equal to a first target temperature and that a temperature of the cold storage apparatus is less than or equal to a preset cold storage temperature.

1930a. Cool a power transmission unit of the battery and/or a power module of the battery under the condition that the temperature of the battery is greater than or equal to the first target temperature.

For example, the power transmission unit of the battery includes a charging connector and/or a charging cable of the battery, such as a charging gun and a charging cable in an integrated energy storage and charging system.

Generally, when the temperature of the battery is high, the temperature of the power transmission unit and/or the power module of the battery is also relatively high, and the power transmission unit and/or the power module of the battery needs to be cooled.

The power module may include a DC/DC converter, a direct current/alternating current (direct current/alternating current, DC/AC) converter, an energy storage inverter, or the like.

Generally, the power transmission unit, power module, or the like of the battery have good temperature resistance and can operate normally even at slightly higher temperatures. Therefore, the power transmission unit and the power module of the battery may be cooled under the condition that the temperature of the battery is high.

In this embodiment of this application, under the condition that the temperature of the battery is greater than or equal to the first target temperature, the power transmission unit and/or the power module of the battery is cooled, which can enable the power transmission unit and/or the power module of the battery to operate within an allowable temperature range, improving performance and service life of the power transmission unit and/or the power module.

1920b. Determine that the temperature of the battery is less than or equal to the first target temperature.

1930b. Obtain second thermal management parameter information.

The second thermal management parameter information includes parameter information reflecting the heating rate of the battery.

The parameter information reflecting the heating rate of the battery includes information on the temperature rise rate of the battery, information on charge and discharge rates of the battery, information on charge and discharge currents of the battery, information on charge and discharge voltages of the battery, or information on charge and discharge powers of the battery.

1940b. Determine a thermal management strategy of the thermal management system based on the first thermal management parameter information and the second thermal management parameter information.

For content of step 1920b to step 1940b, reference can be made to the relevant description in step 420b and step 440b, and details are not repeated here in this application.

1950b. Cool a power transmission unit of the battery and/or a power module of the battery under the condition that the temperature of the battery is less than or equal to the first target temperature and that the parameter value reflecting the heating rate of the battery is within the first range.

For example, the power transmission unit of the battery includes a charging connector and/or a charging cable of the battery, such as a charging gun and a charging cable in an integrated energy storage and charging system.

Generally, the power transmission unit, power module, or the like of the battery have good temperature resistance and can operate normally even at slightly higher temperatures. Therefore, the power transmission unit and the power module of the battery may be cooled under the condition that the temperature of the battery is medium or low and that the heating rate of the temperature is fast.

In this embodiment of this application, under the condition that the temperature of the battery is less than or equal to the first target temperature and that the parameter value reflecting the heating rate of the battery is within the first range, that is, under the condition that the temperature of the battery is not high and that the heating rate of the battery is high, the power transmission unit and/or the power module of the battery is cooled, which can enable the power transmission unit and/or the power module of the battery to operate within an allowable temperature range, improving performance and service life of the power transmission unit and/or the power module.

1920c. Reduce charge and discharge parameters that cause battery temperature to rise under the condition that the temperature of the battery is greater than or equal to the first target temperature and that the temperature of the cold storage apparatus is greater than or equal to the preset cold storage temperature.

For content of step 1920c, reference can be made to the relevant content in step 420c, and details are not repeated here in this application.

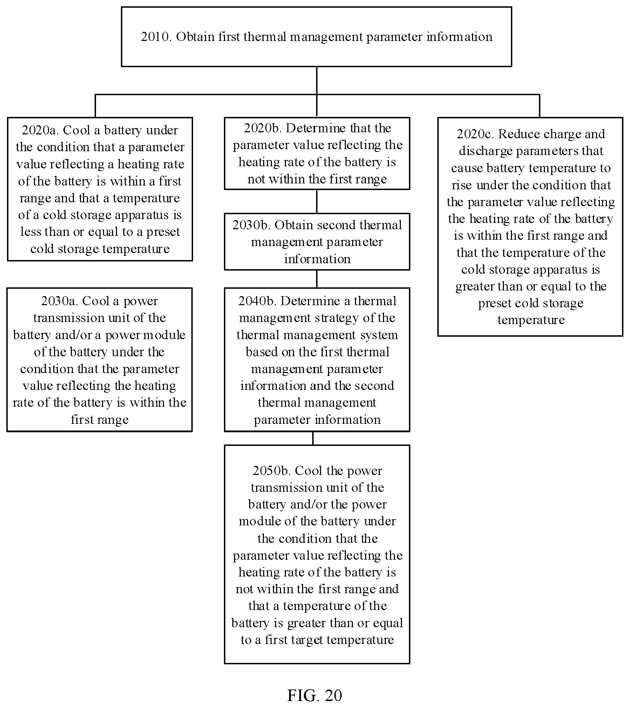

FIG. 20 is a schematic flowchart of a control method for a thermal management system according to an embodiment of this application. The thermal management system includes a liquid coolant system and a refrigerant system, the liquid coolant system including a heat dissipation apparatus and a cold storage apparatus, where the refrigerant system is configured to cool a battery and/or the cold storage apparatus, the heat dissipation apparatus is configured to cool the battery and/or the cold storage apparatus, and the cold storage apparatus is configured to cool the battery.

2010. Obtain first thermal management parameter information.

Obtain the first thermal management parameter information. The first thermal management parameter information includes parameter information of the battery and temperature information of the cold storage apparatus. The parameter information of the battery includes parameter information reflecting a heating rate of the battery.

2020a. Cool the battery under the condition that a parameter value reflecting the heating rate of the battery is within a first range and that a temperature of the cold storage apparatus is less than or equal to a preset cold storage temperature.

2030a. Cool a power transmission unit of the battery and/or a power module of the battery under the condition that the parameter value reflecting the heating rate of the battery is within the first range.

For example, the power transmission unit of the battery includes a charging connector and/or a charging cable of the battery, such as a charging gun and a charging cable in an integrated energy storage and charging system.

Generally, the power transmission unit, power module, or the like of the battery have good temperature resistance and can operate normally even at slightly higher temperatures. Therefore, the power transmission unit and the power module of the battery may be cooled under the condition that the heating rate of the battery is fast.

In this embodiment of this application, under the condition that the parameter value reflecting the heating rate of the battery is within the first range, that is, under the condition that the heating rate of the battery is high, the power transmission unit and/or the power module of the battery is cooled, which can enable the power transmission unit and/or the power module of the battery to operate within an allowable temperature range, improving performance and service life of the power transmission unit and/or the power module.

2020b. Determine that the parameter value reflecting the heating rate of the battery is not within the first range.

2030b. Obtain second thermal management parameter information.

The second thermal management parameter information includes temperature information of the battery.

2040b. Determine a thermal management strategy of the thermal management system based on the first thermal management parameter information and the second thermal management parameter information.

For content of step 2020b to step 2040b, reference can be made to the relevant description in step 620b to step 640b, and details are not repeated here in this application.

2050b. Cool a power transmission unit of the battery and/or a power module of the battery under the condition that the parameter value reflecting the heating rate of the battery is not within the first range and that the temperature of the battery is greater than or equal to the first target temperature.

For example, the power transmission unit of the battery includes a charging connector and/or a charging cable of the battery, such as a charging gun and a charging cable in an integrated energy storage and charging system.

Generally, the power transmission unit, power module, or the like of the battery have good temperature resistance and can operate normally even at slightly higher temperatures. Therefore, the power transmission unit and the power module of the battery may be cooled under the condition that the heating rate of the battery is medium or low and that the temperature of the temperature is high.

In this embodiment of this application, under the condition that the parameter value reflecting the heating rate of the battery is not within the first range and that the temperature of the battery is greater than or equal to the first target temperature, that is, under the condition that the heating rate of the battery is not high and that the temperature of the battery is high, the power transmission unit and/or the power module of the battery is cooled, which can enable the power transmission unit and/or the power module of the battery to operate within an allowable temperature range, improving performance and service life of the power transmission unit and/or the power module.

2020c. Reduce charge and discharge parameters that cause battery temperature to rise under the condition that the parameter value reflecting the heating rate of the battery is within the first range and that the temperature of the cold storage apparatus is greater than or equal to the preset cold storage temperature.

For content of step 2020c, reference can be made to the relevant content in step 620c, and details are not repeated here in this application.

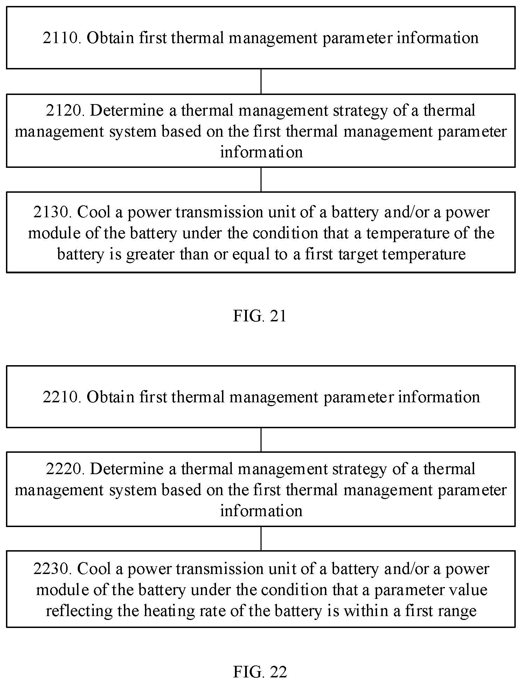

FIG. 21 is a schematic flowchart of a control method for a thermal management system according to an embodiment of this application. The thermal management system includes a liquid coolant system and a refrigerant system, the liquid coolant system including a heat dissipation apparatus and a cold storage apparatus, where the refrigerant system is configured to cool a battery and/or the cold storage apparatus, the heat dissipation apparatus is configured to cool the battery and/or the cold storage apparatus, and the cold storage apparatus is configured to cool the battery.

2110. Obtain first thermal management parameter information.

The first thermal management parameter information includes parameter information of the battery and temperature information of the cold storage apparatus, and the parameter information of the battery includes temperature information of the battery and/or parameter information reflecting a heating rate of the battery.

2120. Determine a thermal management strategy of the thermal management system based on the first thermal management parameter information.

For content of step 2110 and step 2120, reference can be made to the relevant description described above, and details are not repeated here in this application.

2130. Cool a power transmission unit of the battery and/or a power module of the battery under the condition that the temperature of the battery is greater than or equal to the first target temperature.

For example, the power transmission unit of the battery includes a charging connector and/or a charging cable of the battery, such as a charging gun and a charging cable in an integrated energy storage and charging system.

For content of cooling the power transmission unit of the battery and/or the power module of the battery, reference can be made to the relevant description in step 1930a, and details are not repeated here in this application.

FIG. 22 is a schematic flowchart of a control method for a thermal management system according to an embodiment of this application. The thermal management system includes a liquid coolant system and a refrigerant system, the liquid coolant system including a heat dissipation apparatus and a cold storage apparatus, where the refrigerant system is configured to cool a battery and/or the cold storage apparatus, the heat dissipation apparatus is configured to cool the battery and/or the cold storage apparatus, and the cold storage apparatus is configured to cool the battery.

2210. Obtain first thermal management parameter information.

The first thermal management parameter information includes parameter information of the battery and temperature information of the cold storage apparatus, and the parameter information of the battery includes parameter information reflecting a heating rate of the battery.

2220. Determine a thermal management strategy of the thermal management system based on the first thermal management parameter information.

For content of step 2210 and step 2220, reference can be made to the relevant description described above, and details are not repeated here in this application.

2230. Cool a power transmission unit of the battery and/or a power module of the battery under the condition that the parameter value reflecting the heating rate of the battery is within the first range.

For example, the power transmission unit of the battery includes a charging connector and/or a charging cable of the battery, such as a charging gun and a charging cable in an integrated energy storage and charging system.

For content of cooling the power transmission unit of the battery and/or the power module of the battery, reference can be made to the relevant description in step 2030a, and details are not repeated here in this application.

In some embodiments, the heat dissipation apparatus can be controlled to cool the power transmission unit and/or the power module of the battery.

In this embodiment of this application, since the power transmission unit, power module, or the like of the battery can also operate normally at slightly higher temperatures, the heat dissipation apparatus can usually be used to cool the power transmission unit and/or the heat dissipation module under non-extreme environments, saving energy consumption of the thermal management system.

It should be understood that, in the embodiments of this application, sequence numbers of the foregoing processes do not mean execution sequences. The execution sequences of the processes should be determined according to functions and internal logic of the processes, and should not be construed as any limitation on the implementation processes of the embodiments of this application.

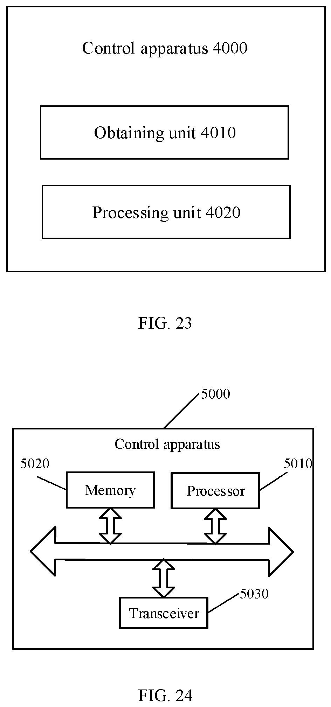

The foregoing has described in detail the control method for a thermal management system in the embodiments of this application, the following describes in detail a control apparatus for a thermal management system in the embodiments of this application with reference to FIG. 23 and FIG. 24, and the technical features described in the method embodiments are applicable to the following apparatus embodiments.

FIG. 23 is a schematic block diagram of a control apparatus for a thermal management system according to an embodiment of this application. As shown in FIG. 23, the control apparatus 4000 includes some or all of the following content. The control apparatus 4000 includes an obtaining unit 4010 and a processing unit 4020.

The thermal management system includes a liquid coolant system and a refrigerant system, the liquid coolant system including a heat dissipation apparatus and a cold storage apparatus, where the refrigerant system is configured to cool a battery and/or the cold storage apparatus, the heat dissipation apparatus is configured to cool the battery and/or the cold storage apparatus, and the cold storage apparatus is configured to cool the battery.

The obtaining unit 4010 is configured to obtain first thermal management parameter information, where the first thermal management parameter information includes parameter information of the battery, and the parameter information of the battery includes temperature information of the battery and/or parameter information reflecting a heating rate of the battery; and the processing unit 4020 is configured to determine a thermal management strategy for the thermal management system based on the first thermal management parameter information.

In some embodiments, the first thermal management parameter information further includes temperature information of the cold storage apparatus.

In some embodiments, the processing unit 4020 is configured to cool the battery under the condition that a temperature of the battery is greater than or equal to a first target temperature and that a temperature of the cold storage apparatus is less than or equal to a preset cold storage temperature.

In some embodiments, the parameter information of the battery includes temperature information of the battery, the processing unit 4020 is configured to determine that the temperature of the battery is less than or equal to the first target temperature; the obtaining unit 4010 is configured to obtain second thermal management parameter information, the second thermal management parameter information including parameter information reflecting the heating rate of the battery; and the processing unit 4020 is configured to determine a thermal management strategy of the thermal management system based on the first thermal management parameter information and the second thermal management parameter information.

In some embodiments, the processing unit 4020 is configured to cool the battery under the condition that the temperature of the battery is less than or equal to the first target temperature, that a parameter value reflecting the heating rate of the battery is within a first range, and that the temperature of the cold storage apparatus is less than or equal to the preset cold storage temperature.

In some embodiments, the processing unit 4020 is configured to: cool the battery under the condition that the temperature of the battery is less than or equal to the first target temperature, that the parameter value reflecting the heating rate of the battery is within a second range, and that the temperature of the cold storage apparatus is less than or equal to the preset cold storage temperature; or cool the battery under the condition that the temperature of the battery is less than or equal to the first target temperature and greater than or equal to a second target temperature, that the parameter value reflecting the heating rate of the battery is within a third range, and that the temperature of the cold storage apparatus is less than or equal to the preset cold storage temperature; or cool the battery and the cold storage apparatus under the condition that the temperature of the battery is less than or equal to the first target temperature, that the parameter value reflecting the heating rate of the battery is within the second range, and that the temperature of the cold storage apparatus is greater than or equal to the preset cold storage temperature; or cool the battery and the cold storage apparatus under the condition that the temperature of the battery is less than or equal to the first target temperature and greater than or equal to the second target temperature, that the parameter value reflecting the heating rate of the battery is within the third range, and that the temperature of the cold storage apparatus is greater than or equal to the preset cold storage temperature; or cool the cold storage apparatus under the condition that the temperature of the battery is less than or equal to the second target temperature, that the parameter value reflecting the heating rate of the battery is within the third range, and that the temperature of the cold storage apparatus is greater than or equal to the preset cold storage temperature; where V1 ≥ V2 ≥ V3, and V1, V2, and V3 represent the heating rates of the battery when the parameter value reflecting the heating rate of the battery is within the first range, the second range, and the third range, respectively.

In some embodiments, the parameter information of the battery includes parameter information reflecting the heating rate of the battery, and the processing unit 4020 is configured to cool the battery under the condition that the parameter value reflecting the heating rate of the battery is within the first range and that the temperature of the cold storage apparatus is less than or equal to the preset cold storage temperature.

In some embodiments, the processing unit 4020 is configured to determine that the parameter value reflecting the heating rate of the battery is not within the first range; the obtaining unit 4010 is configured to obtain second thermal management parameter information, the second thermal management parameter information including temperature information of the battery; and the processing unit 4020 is configured to determine a thermal management strategy of the thermal management system based on the first thermal management parameter information and the second thermal management parameter information.

In some embodiments, the processing unit 4020 is configured to cool the battery under the condition that the parameter value reflecting the heating rate of the battery is within the second range or the third range, that the temperature of the battery is greater than or equal to the first target temperature, and that the temperature of the cold storage apparatus is less than or equal to the preset cold storage temperature, where V1 ≥ V2 ≥ V3, and V2 and V3 represent the heating rates of the battery when the parameter value reflecting the heating rate of the battery is within the second range and the third range, respectively.

In some embodiments, the processing unit 4020 is configured to: cool the battery under the condition that the parameter value reflecting the heating rate of the battery is within the second range or the third range, that the temperature of the battery is less than or equal to the first target temperature and greater than or equal to the second target temperature, and that the temperature of the cold storage apparatus is less than or equal to the preset cold storage temperature; or cool the battery under the condition that the parameter value reflecting the heating rate of the battery is within the second range, that the temperature of the battery is less than or equal to the second target temperature, and that the temperature of the cold storage apparatus is less than or equal to the preset cold storage temperature; or cool the battery and the cold storage apparatus under the condition that the parameter value reflecting the heating rate of the battery is within the second range or the third range, that the temperature of the battery is less than or equal to the first target temperature and greater than or equal to the second target temperature, and that the temperature of the cold storage apparatus is greater than or equal to the preset cold storage temperature; or cool the battery and the cold storage apparatus under the condition that the parameter value reflecting the heating rate of the battery is within the second range, that the temperature of the battery is less than or equal to the second target temperature, and that the temperature of the cold storage apparatus is greater than or equal to the preset cold storage temperature; or cool the cold storage apparatus under the condition that the parameter value reflecting the heating rate of the battery is within the third range, that the temperature of the battery is less than or equal to the second target temperature, and that the temperature of the cold storage apparatus is greater than or equal to the preset cold storage temperature; where V1 ≥ V2 ≥ V3, and V2 and V3 represent the heating rates of the battery when the parameter value reflecting the heating rate of the battery is within the second range and the third range, respectively.

In some embodiments, the processing unit 4020 is configured to: cool the battery under the condition that the temperature of the battery is greater than or equal to the second target temperature and less than or equal to the first target temperature and that the temperature of the cold storage apparatus is less than or equal to the preset cold storage temperature; or cool the battery and the cold storage apparatus under the condition that the temperature of the battery is less than or equal to the first target temperature and greater than or equal to a second target temperature and that the temperature of the cold storage apparatus is greater than or equal to the preset cold storage temperature; or cool the cold storage apparatus under the condition that the temperature of the battery is less than or equal to the second target temperature and that the temperature of the cold storage apparatus is greater than or equal to the preset cold storage temperature.

In some embodiments, the processing unit 4020 is configured to: cool the battery under the condition that the parameter value reflecting the heating rate of the battery is within the second range and that the temperature of the cold storage apparatus is less than or equal to the preset cold storage temperature; or cool the battery and the cold storage apparatus under the condition that the parameter value reflecting the heating rate of the battery is within the second range and that the temperature of the cold storage apparatus is greater than or equal to the preset cold storage temperature; or cool the cold storage apparatus under the condition that the parameter value reflecting the heating rate of the battery is within the third range and that the temperature of the cold storage apparatus is greater than or equal to the preset cold storage temperature, where V1 ≥ V2 ≥ V3, and V2 and V3 represent the heating rates of the battery when the parameter value reflecting the heating rate of the battery is within the second range and the third range, respectively.

In some embodiments, the processing unit 4020 is configured to reduce charge and discharge parameters that cause battery temperature to rise under the condition that the temperature of the battery is greater than or equal to the first target temperature and that the temperature of the cold storage apparatus is greater than or equal to the preset cold storage temperature.

In some embodiments, the processing unit 4020 is configured to reduce charge and discharge parameters that cause battery temperature to rise under the condition that the temperature of the battery is less than or equal to the first target temperature, that the parameter value reflecting the heating rate of the battery is within the first range, and that the temperature of the cold storage apparatus is greater than or equal to the preset cold storage temperature.

In some embodiments, the processing unit 4020 is configured to reduce charge and discharge parameters that cause battery temperature to rise under the condition that the parameter value reflecting the heating rate of the battery is within the first range and that the temperature of the cold storage apparatus is greater than or equal to the preset cold storage temperature.

In some embodiments, the processing unit 4020 is configured to reduce charge and discharge parameters that cause battery temperature to rise under the condition that the parameter value reflecting the heating rate of the battery is not within the first range, that the temperature of the battery is greater than or equal to the first target temperature, and that the temperature of the cold storage apparatus is greater than or equal to the preset cold storage temperature.

In some embodiments, the first thermal management parameter information further includes information about ambient temperature, and the processing unit 4020 is configured to: control the refrigerant system and the cold storage apparatus to cool the battery under the condition that the ambient temperature is greater than or equal to a first ambient temperature; or control the heat dissipation apparatus and the cold storage apparatus to cool the battery under the condition that the ambient temperature is less than or equal to the first ambient temperature.

In some embodiments, the first thermal management parameter information further includes information about ambient temperature, and the processing unit 4020 is configured to: control the refrigerant system to cool the battery under the condition that the ambient temperature is greater than or equal to a first ambient temperature; or control the heat dissipation apparatus to cool the battery under the condition that the ambient temperature is less than or equal to the first ambient temperature.

In some embodiments, the processing unit 4020 is configured to control the cold storage apparatus to cool the battery.

In some embodiments, the processing unit 4020 is configured to: control the refrigerant system to cool the battery and the cold storage apparatus under the condition that the ambient temperature is greater than or equal to a second ambient temperature; or control the heat dissipation apparatus to cool the battery and the cold storage apparatus under the condition that the ambient temperature is less than or equal to the second ambient temperature.

In some embodiments, the processing unit 4020 is configured to: control the refrigerant system to cool the cold storage apparatus under the condition that the ambient temperature is greater than or equal to a third ambient temperature; or control the heat dissipation apparatus to cool the cold storage apparatus under the condition that the ambient temperature is less than or equal to the third ambient temperature.

In some embodiments, the processing unit 4020 is configured to cool a power transmission unit of the battery and/or a power module of the battery under the condition that the temperature of the battery is greater than or equal to the first target temperature.

In some embodiments, the processing unit 4020 is configured to cool a power transmission unit of the battery and/or a power module of the battery under the condition that the temperature of the battery is less than or equal to the first target temperature and that the parameter value reflecting the heating rate of the battery is within the first range.

In some embodiments, the processing unit 4020 is configured to cool a power transmission unit of the battery and/or a power module of the battery under the condition that the parameter value reflecting the heating rate of the battery is within the first range.

In some embodiments, the processing unit 4020 is configured to cool a power transmission unit of the battery and/or a power module of the battery under the condition that the parameter value reflecting the heating rate of the battery is within the second range or the third range and that the temperature of the battery is greater than or equal to the first target temperature.

In some embodiments, the processing unit 4020 is configured to control the heat dissipation apparatus to cool the power transmission unit and/or the power module.

It should be understood that the foregoing and other operations and/or operations of the modules in the control apparatus 4000 for the thermal management system are used to implement corresponding processes in the methods of FIG. 3 to FIG. 22. For brevity, details are not repeated herein.

FIG. 24 is a schematic block diagram of a control apparatus 5000 for a thermal management system according to an embodiment of this application. As shown in FIG. 24, the control apparatus 5000 includes a processor 5010 and a memory 5020, where the memory 5020 is configured to store instructions, and the processor 5010 is configured to read the instructions and perform the methods in the foregoing various embodiments of this application based on the instructions.

The memory 5020 may be a separate device independent of the processor 5010, or may be integrated into the processor 5010.

Optionally, as shown in FIG. 24, the control apparatus 5000 for the thermal management system may further include a transceiver 5030, and the processor 5010 may control the transceiver 5030 to communicate with other devices. Specifically, the transceiver may transmit information or data to other devices, or receive information or data transmitted from other devices.

It should be understood that the processor in this embodiment of this application may be an integrated circuit chip with a signal processing capability. In an implementation process, steps in the foregoing method embodiments can be implemented by using a hardware integrated logic circuit in the processor, or by using instructions in a form of software. The foregoing processor may be a general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, or a discrete hardware component. The methods, steps, and logical block diagrams that are disclosed in the embodiments of this application can be implemented or performed. The general-purpose processor may be a microprocessor or any regular processor. The steps of the methods disclosed with reference to the embodiments of the application may be directly implemented by a hardware decoding processor, or may be implemented by a combination of hardware and a software module in a decoding processor. The software module may be located in a storage medium mature in the art, such as a random access memory, a flash memory, a read-only memory, a programmable read-only memory or electrically erasable programmable memory, or a register. The storage medium is located in the memory, and the processor reads information in the memory and completes the steps in the foregoing methods in combination with hardware of the processor.

It may be understood that the memory in the embodiments of this application may be a volatile memory or a nonvolatile memory, or may include a volatile memory and a nonvolatile memory. The non-volatile memory may be a read-only memory (read-only memory, ROM), a programmable read-only memory (programmable rom, PROM), an erasable programmable read-only memory (erasable PROM, EPROM), an electrically erasable programmable read-only memory (electrically eprom, EEPROM), or a flash memory. The volatile memory may be a random access memory (random access memory, RAM) and is used as an external cache. By way of example but not restrictive description, many forms of RAMs are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any other proper types of memories.

An embodiment of this application further provides an electric device, the electric device including a battery, a thermal management system of the battery, and a control apparatus provided in embodiments of this application.

An embodiment of this application further provides an integrated energy storage and charging system, and the electric device includes an energy storage system, a charging pile, a thermal management system, and a control apparatus provided in embodiments of this application.

An embodiment of this application further provides a computer-readable storage medium for storing a computer program.

Optionally, the computer-readable storage medium may be applied to the control apparatus for a thermal management system in the embodiments of this application, and when the computer program is run on a computer, the computer is enabled to perform corresponding processes implemented by a control apparatus in the methods in the embodiments of this application. For brevity, details are not repeated herein.

An embodiment of this application further provides a computer program product including computer program instructions.

Optionally, the computer program product may be applied to the control apparatus for a thermal management system in the embodiments of this application, and when the computer program instructions are run on a computer, the computer is enabled to perform corresponding processes implemented by the control apparatus for the thermal management system in the methods in the embodiments of this application. For brevity, details are not repeated herein.

An embodiment of this application further provides a computer program.

Optionally, the computer program may be applied to the control apparatus for a thermal management system in the embodiments of this application, and when the computer program is run on a computer, the computer is enabled to perform corresponding processes implemented by the control apparatus for the thermal management system in the methods in the embodiments of this application. For brevity, details are not repeated herein.

Persons of ordinary skill in the art will appreciate that the units and algorithm steps of various examples described with reference to the embodiments disclosed in this specification can be implemented by using electronic hardware or a combination of computer software and electronic hardware. Whether the functions are executed by hardware or software depends on particular applications and design constraints of the technical solutions. Persons skilled in the art can employ a different method to implement the described functions for each particular application, but such implementations shall not be construed as going beyond the scope of this application.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division of the units is merely a logical function division, and another division manner may be used during actual implementation. For example, a plurality of units or components may be combined, or may be integrated into another system, or some features may be ignored or not performed. In addition, the mutual couplings or direct couplings or communication connections involved in the embodiments of this application may be implemented by using some interfaces. The indirect couplings or communication connections between apparatuses or units may be implemented in electrical, mechanical, or other forms.

Units described as separate components may or may not be physically separate. A component displayed as a unit may or may not be a physical unit, meaning that the component may be located in one place, or may be distributed in a plurality of network elements. Some or all of the units may be selected based on an actual requirement, to achieve the objectives of the solutions in the embodiments.

In addition, function units in the embodiments of this application may be integrated into one processing unit, or each of the units may exist alone physically, or two or more units may be integrated into one unit.

When implemented in the form of a software functional unit and sold or used as an independent product, the function may be stored in a computer-readable storage medium. Based on such an understanding, the technical solutions of this application substantially or parts making contributions to the conventional art or part of the technical solutions may be embodied in form of software product, and the computer software product is stored in a storage medium, including a plurality of instructions configured to enable a computer device (which may be a personal computer, a server, a network device or the like) to execute all or part of the steps of the method in each embodiment of this application. The foregoing storage medium includes: any medium that can store program code, such as a USB flash drive, a removable hard disk, a ROM, a RAM, a magnetic disk, or an optical disc.

Although this application has been described with reference to the preferred embodiments, various modifications to this application and replacements of the components therein with equivalents can be made without departing from the scope of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A control method for a thermal management system, **characterized in that** the thermal management system comprises a liquid coolant system and a refrigerant system, the liquid coolant system comprising a heat dissipation apparatus and a cold storage apparatus, wherein the refrigerant system is configured to cool a battery and/or the cold storage apparatus, the heat dissipation apparatus is configured to cool the battery and/or the cold storage apparatus, and the cold storage apparatus is configured to cool the battery, and the method comprises:
obtaining first thermal management parameter information, wherein the first thermal management parameter information comprises parameter information of the battery, and the parameter information of the battery comprises temperature information of the battery and/or parameter information reflecting a heating rate of the battery; and
determining a thermal management strategy of the thermal management system based on the first thermal management parameter information.

2. The method according to claim 1, **characterized in that** the first thermal management parameter information further comprises temperature information of the cold storage apparatus.

3. The method according to claim 2, **characterized in that** the parameter information of the battery comprises temperature information of the battery, and the determining a thermal management strategy of the thermal management system based on the first thermal management parameter information comprises:
cooling the battery under the condition that a temperature of the battery is greater than or equal to a first target temperature and a temperature of the cold storage apparatus is less than or equal to a preset cold storage temperature.

4. The method according to any one of claims 1 to 3, **characterized in that** the parameter information of the battery comprises the temperature information of the battery, and before the determining a thermal management strategy of the thermal management system based on the first thermal management parameter information, the method further comprises:
determining that the temperature of the battery is less than or equal to the first target temperature; and
obtaining second thermal management parameter information, the second thermal management parameter information comprising parameter information reflecting the heating rate of the battery; and
the determining a thermal management strategy of the thermal management system based on the first thermal management parameter information comprises:
determining a thermal management strategy of the thermal management system based on the first thermal management parameter information and the second thermal management parameter information.

5. The method according to claim 4, **characterized in that** the determining a thermal management strategy of the thermal management system based on the first thermal management parameter information and the second thermal management parameter information comprises:
cooling the battery under the condition that the temperature of the battery is less than or equal to the first target temperature, that a parameter value reflecting the heating rate of the battery is within a first range, and that the temperature of the cold storage apparatus is less than or equal to the preset cold storage temperature.

6. The method according to claim 4 or 5, **characterized in that** the determining a thermal management strategy of the thermal management system based on the first thermal management parameter information and the second thermal management parameter information comprises:
cooling the battery under the condition that the temperature of the battery is less than or equal to the first target temperature, that the parameter value reflecting the heating rate of the battery is within a second range, and that the temperature of the cold storage apparatus is less than or equal to the preset cold storage temperature; or
cooling the battery under the condition that the temperature of the battery is less than or equal to the first target temperature and greater than or equal to a second target temperature, that the parameter value reflecting the heating rate of the battery is within a third range, and that the temperature of the cold storage apparatus is less than or equal to the preset cold storage temperature; or
cooling the battery and the cold storage apparatus under the condition that the temperature of the battery is less than or equal to the first target temperature, that the parameter value reflecting the heating rate of the battery is within the second range, and that the temperature of the cold storage apparatus is greater than or equal to the preset cold storage temperature; or
cooling the battery and the cold storage apparatus under the condition that the temperature of the battery is less than or equal to the first target temperature and greater than or equal to the second target temperature, that the parameter value reflecting the heating rate of the battery is within the third range, and that the temperature of the cold storage apparatus is greater than or equal to the preset cold storage temperature; or
cooling the cold storage apparatus under the condition that the temperature of the battery is less than or equal to the second target temperature, that the parameter value reflecting the heating rate of the battery is within the third range, and that the temperature of the cold storage apparatus is greater than or equal to the preset cold storage temperature;
wherein V1 ≥ V2 ≥ V3, and V1, V2, and V3 represent the heating rates of the battery when the parameter value reflecting the heating rate of the battery is within the first range, the second range, and the third range, respectively.

7. The method according to claim 2, **characterized in that** the parameter information of the battery comprises parameter information reflecting the heating rate of the battery, and the determining a thermal management strategy of the thermal management system based on the first thermal management parameter information comprises:
cooling the battery under the condition that a parameter value reflecting the heating rate of the battery is within a first range and that a temperature of the cold storage apparatus is less than or equal to a preset cold storage temperature.

8. The method according to claim 7, **characterized in that** before the determining a thermal management strategy of the thermal management system based on the first thermal management parameter information, the method further comprises:
determining that the parameter value reflecting the heating rate of the battery is not within the first range; and
obtaining second thermal management parameter information, the second thermal management parameter information comprising the temperature information of the battery; and
the determining a thermal management strategy of the thermal management system based on the first thermal management parameter information comprises:
determining a thermal management strategy of the thermal management system based on the first thermal management parameter information and the second thermal management parameter information.

9. The method according to claim 8, **characterized in that** the determining a thermal management strategy of the thermal management system based on the first thermal management parameter information and the second thermal management parameter information comprises:
cooling the battery under the condition that the parameter value reflecting the heating rate of the battery is within a second range or a third range, that a temperature of the battery is greater than or equal to a first target temperature, and that the temperature of the cold storage apparatus is less than or equal to the preset cold storage temperature, wherein V1 ≥ V2 ≥ V3, and V1, V2, and V3 represent the heating rates of the battery when the parameter value reflecting the heating rate of the battery is within the first range, the second range, and the third range, respectively.

10. The method according to claim 8 or 9, **characterized in that** the determining a thermal management strategy of the thermal management system based on the first thermal management parameter information and the second thermal management parameter information comprises:
cooling the battery under the condition that the parameter value reflecting the heating rate of the battery is within the second range or the third range, that the temperature of the battery is less than or equal to the first target temperature and greater than or equal to a second target temperature, and that the temperature of the cold storage apparatus is less than or equal to the preset cold storage temperature; or
cooling the battery under the condition that the parameter value reflecting the heating rate of the battery is within the second range, that the temperature of the battery is less than or equal to the second target temperature, and that the temperature of the cold storage apparatus is less than or equal to the preset cold storage temperature; or
cooling the battery and the cold storage apparatus under the condition that the parameter value reflecting the heating rate of the battery is within the second range or the third range, that the temperature of the battery is less than or equal to the first target temperature and greater than or equal to the second target temperature, and that the temperature of the cold storage apparatus is greater than or equal to the preset cold storage temperature; or
cooling the battery and the cold storage apparatus under the condition that the parameter value reflecting the heating rate of the battery is within the second range, that the temperature of the battery is less than or equal to the second target temperature, and that the temperature of the cold storage apparatus is greater than or equal to the preset cold storage temperature; or
cooling the cold storage apparatus under the condition that the parameter value reflecting the heating rate of the battery is within the third range, that the temperature of the battery is less than or equal to the second target temperature, and that the temperature of the cold storage apparatus is greater than or equal to the preset cold storage temperature;
wherein V1 ≥ V2 ≥ V3, and V1, V2, and V3 represent the heating rates of the battery when the parameter value reflecting the heating rate of the battery is within the first range, the second range, and the third range, respectively.

11. The method according to any one of claims 3 to 10, **characterized in that** the first thermal management parameter information further comprises information about ambient temperature, and the cooling the battery comprises:
controlling the refrigerant system and the cold storage apparatus to cool the battery under the condition that the ambient temperature is greater than or equal to a first ambient temperature; or
controlling the heat dissipation apparatus and the cold storage apparatus to cool the battery under the condition that the ambient temperature is less than or equal to the first ambient temperature.

12. The method according to claim 6 or 10, **characterized in that** the first thermal management parameter information further comprises information about ambient temperature, and the cooling the battery comprises:
controlling the refrigerant system to cool the battery under the condition that the ambient temperature is greater than or equal to a first ambient temperature; or
controlling the heat dissipation apparatus to cool the battery under the condition that the ambient temperature is less than or equal to the first ambient temperature.

13. The method according to claim 6 or 10, **characterized in that** the cooling the battery comprises:
controlling the cold storage apparatus to cool the battery.

14. The method according to claim 6 or 10, **characterized in that** the first thermal management parameter information further comprises information about ambient temperature, and the cooling the battery and the cold storage apparatus comprises:
controlling the refrigerant system to cool the battery and the cold storage apparatus under the condition that the ambient temperature is greater than or equal to a second ambient temperature; or
controlling the heat dissipation apparatus to cool the battery and the cold storage apparatus under the condition that the ambient temperature is less than or equal to the second ambient temperature.

15. The method according to claim 6 or 10, **characterized in that** the first thermal management parameter information further comprises information about ambient temperature, and the cooling the cold storage apparatus comprises:
controlling the refrigerant system to cool the cold storage apparatus under the condition that the ambient temperature is greater than or equal to a third ambient temperature; or
controlling the heat dissipation apparatus to cool the cold storage apparatus under the condition that the ambient temperature is less than or equal to the third ambient temperature.

16. The method according to any one of claims 3 to 6, **characterized in that** the method further comprises:
cooling a power transmission unit of the battery and/or a power module of the battery under the condition that the temperature of the battery is greater than or equal to the first target temperature; or
cooling a power transmission unit of the battery and/or a power module of the battery under the condition that the temperature of the battery is less than or equal to the first target temperature and that the parameter value reflecting the heating rate of the battery is within the first range.

17. The method according to any one of claims 7 to 10, **characterized in that** the method further comprises:
cooling a power transmission unit of the battery and/or a power module of the battery under the condition that the parameter value reflecting the heating rate of the battery is within the first range; or
cooling a power transmission unit of the battery and/or a power module of the battery under the condition that the parameter value reflecting the heating rate of the battery is within the second range or the third range and that the temperature of the battery is greater than or equal to the first target temperature.

18. The method according to claim 16 or 17, **characterized in that** the cooling a power transmission unit of the battery and/or a power module of the battery comprises:
controlling the heat dissipation apparatus to cool the power transmission unit and/or the power module.

19. A control apparatus for a thermal management system, **characterized in that** the thermal management system comprises a liquid coolant system and a refrigerant system, the liquid coolant system comprising a heat dissipation apparatus and a cold storage apparatus, wherein the refrigerant system is configured to cool a battery and/or the cold storage apparatus, the heat dissipation apparatus is configured to cool the battery and/or the cold storage apparatus, and the cold storage apparatus is configured to cool the battery, and the apparatus comprises:
an obtaining unit, configured to obtain first thermal management parameter information, wherein the first thermal management parameter information comprises parameter information of the battery, and the parameter information of the battery comprises temperature information of the battery and/or parameter information reflecting a heating rate of the battery; and
a processing unit, configured to determine a thermal management strategy of the thermal management system based on the first thermal management parameter information.

20. An integrated energy storage and charging system, **characterized in that** the integrated energy storage and charging system comprises an energy storage system, a charging station, a thermal management system, and the control apparatus according to claim 19.
